# EUROPEAN PATENT APPLICATION

(11) **EP 4 806 942 A1**
(43) Date of publication of application: **16.09.2026**
(21) Application number: 25162767.5
(22) Date of filing: 10.03.2025
(51) Int. Cl.: C08G 77/445, C08G 77/448, C08G 77/458, C08G 77/46

(54) **SILOXANE COPOLYMER COMPOUND FOR THE MANUFACTURE OF A RELEASE LINER**

(71) Applicant: CHT Germany GmbH, 72072 Tübingen (DE)
(72) Inventor: BAUER, Matthias, 72072 Tübingen (DE); HELD-BELLER, Silvia, 72072 Tübingen (DE); ROMFELD, Carsten, 72072 Tübingen (DE); OBERLE, Tilmann, 72072 Tübingen (DE)
(74) Representative: Maiwald GmbH

(57) **Abstract**

The disclosed invention relates to a siloxane copolymer compound comprising the repeating units B1, B2 and at least one of B3 and B4, a method of preparing said siloxane copolymer compound, an aqueous dispersion comprising said siloxane copolymer compound, which is useful in the preparation of a release liner having improved recyclability. The invention also relates to a release liner comprising said siloxane copolymer compound and an adhesive article comprising said release liner.

## Description

### Technical Field

The present invention relates to a material having release properties which is suitable for manufacturing a release liner. More specifically, the present invention relates to a siloxane copolymer compound having release properties and thus imparting release properties when it is coated onto a material such as a paper base or a polymer film, a release liner comprising said siloxane copolymer compound, an adhesive article comprising an adhesive layer that is covered with said release liner. Furthermore, the present invention relates to methods for preparing these items.

### Background of the Invention

Self-adhesive labels are the most commonly used technology in the labelling industry, meeting a wider range of end-user requirements more effectively than any other form of labelling.

Self-adhesive labels are a combination of a self-adhesive label material laminated against a "silicone release liner". They are produced by taking a continuous base material (paper or plastic film) as the base, onto which a silicone release coating is applied as a very thin layer (typically having a thickness of about 1 µm or less), followed by a self-adhesive layer and finally a label 'face' material (paper or film). The 'silicone release liner' is the name used for the layer of base which is coated with silicone, and from which the label is peeled away during dispensing.

A typical method of forming a silicone release coating on a base material comprises the steps of (i) applying to the base a thin layer of a coating composition containing an organosiloxane bearing vinyl groups, an organosiloxane bearing Si-H groups, and a Pt-catalyst (such as Karstedt's catalyst ), and (ii) curing the layer of the coating composition on the base by heating the coating composition such that a Pt-catalyzed polyaddition reaction of the organosiloxane bearing vinyl groups and the organosiloxane bearing Si-H groups is effected and a polymeric silicone layer is formed. This method usually requires special technical equipment and controlling the Pt-catalyzed polyaddition reaction during the curing step can be complex. In view of this, it is desirable to modify the method in such a manner that it can be carried out using equipment commonly used in a papermaking process or a paper-converting process and no complex curing step is involved.

Independently, it has to be borne in mind that the Pt catalyst used in the curing step remains in the silicone layer and results in a content of Pt in the silicone layer of up to 100 ppm. Pt is a precious metal and its compounds are generally costly reagents. Therefore, it is desirable to reduce the amount of Pt remaining in the silicone release layer.

Once the self-adhesive label has been removed from the release liner and applied to the final surface, the silicone release liner plays no further role in the labelling process and is ready to be recycled. However, since the annual amount of silicone-coated base material (paper or plastic film) to be recycled is relatively small in comparison to the total amount of paper or plastic film produced per year, it is desirable to recycle the silicone-coated base material by feeding it into a recycling process of standard paper or plastic instead of setting up a process specifically dedicated to recycling of silicone-coated base material.

Since the majority of silicone release liners used in self-adhesive labels are based on using a paper as base material, it is desirable that the silicone-coated paper base can be fed into a common papermaking process without interfering with the quality of the paper obtained from such a process. This is impeded to a large extent by the presence of the silicone layer on common release liners, however. As a result, a deterioration of the quality of the paper obtained from such a process can only be prevented at present by limiting the amount of silicone-coated paper base fed into the papermaking process. Depending on the specific papermaking process, the amount of silicone-coated paper base must not exceed about 20-30 % of the material to be recycled that is fed into the process. It is desirable to provide a release liner comprising a paper base that can be recycled by being fed in a higher amount into a papermaking process without adversely affecting the quality of the paper obtained.

In view of these considerations, it is hence desirable to provide a release liner which can be prepared without the need of using special equipment, costly precious metal compounds and curing reactions that are complex to control and which is more suitable for being recycled, i.e. it can be present in the feed stream of a common papermaking process in high amounts without interfering with the quality of the paper obtained.

Therefore, it is an object of the present invention to provide a release liner addressing these issues. In other words, it is a first object of the present invention to provide a material having release properties which is suitable for manufacturing a release liner which can be prepared without the need of using special equipment, costly precious metal compounds and curing reactions that are complex to control and which can be recycled by being fed into the feed stream of a papermaking process in high amounts without interfering with the quality of the paper obtained.

It is a second object of the present invention to provide a method of preparing said material having release properties.

It is a third object of the present invention to provide an aqueous dispersion of said material having release properties, which can be applied onto the surface of a base.

It is a fourth object of the present invention to provide a method of preparing said aqueous dispersion.

It is a fifth object of the present invention to provide a release liner comprising
(i) a base that is preferably selected from paper or plastic which base has at least one surface, and
(ii) a layer of said material having release properties on said at least one surface of the base.

It is a sixth object of the present invention to provide a method of preparing said release liner.

It is a seventh object of the present invention to provide an adhesive article comprising in this order
(i) an article having a surface,
(ii) a layer of an adhesive,
(iii) a layer of said release material, and
(iv) a base.

### Brief Description of the Invention

Surprisingly, it was found that the drawbacks inherent to the prior art as summarized above can be overcome and the aforementioned objects can be achieved as described in the following. Thus, the invention described in the following was completed.

In a first aspect, the present invention is directed to the provision of a siloxane copolymer compound comprising the repeating units B1, B2 and at least one of B3 and B4, wherein each occurrence of B1, B2, B3, and B4 independently has the following meaning

B1 has a siloxane structure consisting of substructures B1a to B1c represented by the following formulae

| | | |
|---|---|---|
| B1a | [(R¹)₂(A)Si-] | of which t units are present, |
| B1b | [-(R¹)₂Si-] | of which z1 units are present, |
| B1c | [-(R¹)(A)Si-] | of which z2 units are present, |

wherein
the silicon atom present in each of the substructures B1a to B1c is linked to the silicon atom of an adjacent substructure by means of an oxygen atom,
R¹ independently is a C1-C30 hydrocarbon group,
A is @Si-R²-(-O-R¹⁴-)ₑ₁-{-O-[(EOₓ)/(AO)₁₋ₓ)]_{y}-@1}ₑ₂
@Si is a site of covalent bonding to the silicon atom of substructure B1a or B1c,
@1 is a site of covalent bonding,
R² is a linear or branched C2-C8 alkylene group,
R¹⁴ is a linear, branched or cyclic aliphatic group having (e2 + 1) to 6 carbon atoms and e2 sites of covalent bonding to an oxygen atom of each of the e2 moieties represented by {-O-[(EOₓ)/(AO)₁₋ₓ)]_{y}-@1} and wherein no carbon atom of R¹⁴ is covalently bonded to more than one oxygen atom,
e1 is 0 or 1,
e2 is 1 to 3, wherein e2 is 1, when e1 = 0,
EO represents a -CH₂-CH₂-O- group,
AO represents a -CH₂-CH(R³)-O- group or a -CH(R³)-CH₂-O- group,
R³ represents a linear or branched C1-C4 alkyl group,
[(EOₓ)/(AO)₁₋ₓ)]_{y} represents a substructure in which a total number of y structural units represented by EO and/or AO are covalently bonded in a statistical sequence or in a block sequence,
x has a value in the range of 0 to 1,
y has a value in the range of 0 to 100,
t is 2,
z1 is 0 to 200,
z2 is 0 to 20;

B2 has a structure represented by the following formula

U[-NH-C(=O)-@2]ₘ

wherein
U is a substructure comprising 1 to 20 carbon atoms, wherein the nitrogen atom of each moiety -NH-C(=O)-@2 is covalently bonded to a carbon atom of U,
m is 2 to 6,
@2 is a site of covalent bonding;

B3 has a structure represented by the following formula

R⁴[-O-@1]ₙ

wherein
R⁴ is a substructure comprising at least n carbon atoms, wherein the oxygen atom of each moiety -O-@1 is covalently bonded to a carbon atom of R⁴ and no carbon atom of R⁴ is covalently bonded to more than one moiety -O-@1,
n is 1 to 6,
@1 is a site of covalent bonding;

B4 has a structure represented by the following formula (B4a) or (B4b)

| | |
|---|---|
| (B4a) | R⁶[-NR⁶-@1]ₚ |
| (B4b) | R⁶(@1-)N-[-CH₂-CH₂-NR⁶(-@1)-]ᵤ-CH₂-CH₂-NR⁶(-@1) |

wherein
R⁵ is a substructure comprising at least p carbon atoms, wherein the nitrogen atom of each moiety -NR⁶-@1 is covalently bonded to a carbon atom of R⁵ and no carbon atom of R⁵ is covalently bonded to more than one moiety -NR⁶-@1,
each R⁶ is independently hydrogen or a group comprising at least 1 carbon atom,
p is 1 to 6,
u is 1 to 5
@1 is a site of covalent bonding;
and wherein a covalent bond is present between a site marked with @1 and a site marked with @2.

In a second aspect, the present invention is directed to the provision of a method of preparing a siloxane copolymer compound comprising the repeating units B1, B2 and at least one of B3 and B4, wherein each occurrence of B1, B2, B3, and B4 independently has the meaning defined in relation to the first aspect of the present invention, which method comprises
(a) a first step of reacting
- an isocyanate compound B2r of the general formula U[-NCO]ₘ,
with
- a siloxane compound B1r having a siloxane structure consisting of substructures B1ar, B1b and B1cr represented by the following formulae

| | | |
|---|---|---|
| B1ar | [(R¹)₂(Ar)Si-] | of which t units are present, |
| B1b | [-(R¹)₂Si-] | of which z1 units are present, |
| B1cr | [-(R¹)(Ar)Si-] | of which z2 units are present, |

wherein
the silicon atom present in each of the substructures B1ar, B1b and B1cr is linked to the silicon atom of an adjacent substructure by means of an oxygen atom,
Ar is @Si-R²-(-O-R¹⁴-)ₑ₁-{-O-[(EOₓ)/(AO)₁₋ₓ)]_{y}-H}ₑ₂
@Si is a site of covalent bonding to the silicon atom of substructure B1a or B1c,
and, optionally,
- a polyol compound B3r of the general formula R⁴[-OH]ₙ
and
(b) a second step of reacting the product obtained from the first step with a polyamine B4r of the general formula (B4ar) or (B4br)

| | |
|---|---|
| (B4a) | R⁵[-NHR⁶]ₚ |
| (B4b) | R⁶HN-[-CH₂-CH₂-NHR⁶-]ᵤ-CH₂-CH₂-NHR⁶ ; |

wherein each of R¹, R², R⁴, R⁵, R⁶, t, z1, z2, m, n, p, u, x, y have the meanings as defined in relation to the first aspect of the present invention.

In a third aspect, the present invention is directed to the provision of an aqueous dispersion comprising (a) the siloxane copolymer compound according to the first aspect of the invention, and (b) water.

In a fourth aspect, the present invention is directed to the provision of a method of preparing the aqueous dispersion according to the third aspect of the invention, which method comprises the steps of (a) preparing a mixture of (i) a solution of a siloxane copolymer compound, which siloxane copolymer compound is according to the first aspect of the invention, in an organic solvent, which organic solvent is miscible with water, (ii) optionally an adjuvant, and (iii) water, and (b) removing at least a part of the organic solvent from the mixture prepared in step (a).

In a fifth aspect, the present invention is directed to the provision of a release liner comprising (a) a base, and (b) a layer of the siloxane copolymer compound according to the first aspect of the invention.

In a sixth aspect, the present invention is directed to the provision of a method of preparing a release liner according to the fifth aspect of the invention, which method comprises the steps of (a) applying an aqueous dispersion according to the third aspect of the invention to a surface of a base, and (b) allowing the water and any organic solvent, which can be optionally present, to evaporate from said dispersion.

In a seventh aspect, the present invention is directed to the provision of an adhesive article comprising, in this order, (i) an article having a surface, (ii) a layer of an adhesive on the surface of said article, which layer has a thickness in the range of 5-500 µm, (iii) a layer of the siloxane copolymer compound according to the first aspect of the invention, which layer has a thickness in the range of 1-30 µm, and (iv) a base.

The invention is described in detail in the following.

### Detailed Description of the Invention

In particular, the present invention encompasses the following embodiments.
[1.1] Siloxane copolymer compound comprising the repeating units B1, B2 and at least one of B3 and B4, wherein each occurrence of B1, B2, B3, and B4 independently has the following meaning:
B1 has a siloxane structure consisting of substructures B1a to B1c represented by the following formulae

| | | |
|---|---|---|
| B1a | [(R¹)₂(A)Si-] | of which t units are present, |
| B1b | [-(R¹)₂Si-] | of which z1 units are present, |
| B1c | [-(R¹)(A)Si-] | of which z2 units are present, |

wherein
the silicon atom present in each of the substructures B1a to B1c is linked to the silicon atom of an adjacent substructure by means of an oxygen atom,
R¹ independently is a C1-C30 hydrocarbon group,
A is @Si-R²-(-O-R¹⁴-)ₑ₁-{-O-[(EOₓ)/(AO)₁₋ₓ)]_{y}-@1}ₑ₂,
@Si is a site of covalent bonding to the silicon atom of substructure B1a or B1c,
@1 is a site of covalent bonding,
R² is a linear or branched C2-C8 alkylene group,
R¹⁴ is a linear, branched or cyclic aliphatic group having (e2 + 1) to 6 carbon atoms and e2 sites of covalent bonding to an oxygen atom of each of the e2 moieties represented by {-O-[(EOₓ)/(AO)₁₋ₓ)]_{y}-@1} and wherein no carbon atom of R¹⁴ is covalently bonded to more than one oxygen atom,
e1 is 0 or 1,
e2 is 1 to 3, wherein e2 is 1, when e1 = 0,
EO represents a -CH₂-CH₂-O- group,
AO represents a -CH₂-CH(R³)-O- group or a -CH(R³)-CH₂-O- group, R³ represents a linear or branched C1-C4 alkyl group,
[(EOₓ)/(AO)₁₋ₓ)]_{y} represents a substructure in which a total number of y structural units represented by EO and/or AO are covalently bonded in a statistical sequence or in a block sequence,
x has a value in the range of 0 to 1,
y has a value in the range of 0 to 100,
t is 2,
z1 is 0 to 200,
z2 is 0 to 20;
B2 has a structure represented by the following formula

U[-NH-C(=O)-@2]ₘ

wherein
U is a substructure comprising 1 to 20 carbon atoms, wherein the nitrogen atom of each moiety -NH-C(=O)-@2 is covalently bonded to a carbon atom of U, m is 2 to 6,
@2 is a site of covalent bonding;
B3 has a structure represented by the following formula

R⁴[-O-@1]ₙ

wherein
R⁴ is a substructure comprising at least n carbon atoms, wherein the oxygen atom of each moiety -O-@1 is covalently bonded to a carbon atom of R⁴ and no carbon atom of R⁴ is covalently bonded to more than one moiety -O-@1, n is 1 to 6,
@1 is a site of covalent bonding;
B4 has a structure represented by the following formula (B4a) or (B4b)

| | |
|---|---|
| (B4a) | R⁶[-NR⁶-@1]ₚ |
| (B4b) | R⁶(@1-)N-[-CH₂-CH₂-NR⁶(-@1)-]ᵤ-CH₂-CH₂-NR⁶(-@1) |

wherein
R⁵ is a substructure comprising at least p carbon atoms, wherein the nitrogen atom of each moiety -NR⁶-@1 is covalently bonded to a carbon atom of R⁵ and no carbon atom of R⁵ is covalently bonded to more than one moiety -NR⁶-@1, each R⁶ is independently hydrogen or a group comprising at least 1 carbon atom,
p is 1 to 6,
u is 1 to 5
@1 is a site of covalent bonding;
and wherein a covalent bond is present between a site marked with @1 and a site marked with @2.
[1.2] Siloxane copolymer compound according to embodiment [1.1], wherein e1 is 1.
[1.3] Siloxane copolymer compound according to embodiment [1.2], wherein e2 is 1.
[1.4] Siloxane copolymer compound according to embodiment [1.2], wherein e2 is 2.
[1.5] Siloxane copolymer compound according to embodiment [1.2], wherein e2 is 3.
[1.6] Siloxane copolymer compound according to any one of embodiments [1.2] to [1.5], wherein R¹⁴ is a linear aliphatic group having (e2 + 1) to 4 carbon atoms.
[1.7] Siloxane copolymer compound according to any one of embodiments [1.2] to [1.5], wherein R¹⁴ is a linear aliphatic group having 4 to 6 carbon atoms.
[1.8] Siloxane copolymer compound according to embodiment [1.5], wherein R¹⁴ is a linear aliphatic group having 4 carbon atoms.
[1.9] Siloxane copolymer compound according to embodiment [1.5], wherein R¹⁴ is a branched aliphatic group having 5 or 6 carbon atoms.
[1.10] Siloxane copolymer compound according to embodiment [1.9], wherein R¹⁴ is a branched aliphatic group having 6 carbon atoms.
[1.11] Siloxane copolymer compound according to embodiment [1.4], wherein R¹⁴ is a branched aliphatic group having 5 or 6 carbon atoms.
[1.12] Siloxane copolymer compound according to embodiment [1.11], wherein R¹⁴ is a branched aliphatic group having 5 carbon atoms.
[1.13] Siloxane copolymer compound according to embodiment [1.11], wherein R¹⁴ is a branched aliphatic group having 6 carbon atoms.
[1.14] Siloxane copolymer compound according to embodiment [1.1], wherein e1 is 0 and e2 is 1.
[1.15] Siloxane copolymer compound according to any one of embodiments [1.1] to [1.14], wherein R¹ is a C1-C12 hydrocarbon group.
[1.16] Siloxane copolymer compound according to embodiment [1.15], wherein R¹ is a C1-C7 hydrocarbon group.
[1.17] Siloxane copolymer compound according to any one of embodiments [1.1] to [1.16], wherein R¹ comprises an aromatic substructure.
[1.18] Siloxane copolymer compound according to any one of embodiments [1.1] to [1.17], wherein R¹ comprises a linear or branched aliphatic substructure.
[1.19] Siloxane copolymer compound according to embodiment [1.15], wherein R¹ is a linear or branched C1-C6 alkyl group.
[1.20] Siloxane copolymer compound according to embodiment [1.15], wherein R¹ is methyl.
[1.21] Siloxane copolymer compound according to any one of embodiments [1.1] to [1.20], wherein R² is a linear or branched C3-C6 alkylene group.
[1.22] Siloxane copolymer compound according to any one of embodiments [1.1] to [1.20], wherein R² is a linear C3 alkylene group.
[1.23] Siloxane copolymer compound according to any one of embodiments [1.1] to [1.22], wherein R³ is a linear C1-C4 alkyl group.
[1.24] Siloxane copolymer compound according to any one of embodiments [1.1] to [1.22], wherein R³ is a linear C1-C3 alkyl group.
[1.25] Siloxane copolymer compound according to any one of embodiments [1.1] to [1.22], wherein R³ is a methyl group.
[1.26] Siloxane copolymer compound according to any one of embodiments [1.1] to [1.25], wherein y has a value of 0 or y has a value of 1.
[1.27] Siloxane copolymer compound according to any one of embodiments [1.1] to [1.25], wherein y has a value in the range of 1 to 50.
[1.28] Siloxane copolymer compound according to any one of embodiments [1.1] to [1.25], wherein y has a value in the range of 2 to 30.
[1.29] Siloxane copolymer compound according to any one of embodiments [1.1] to [1.25], wherein y has a value in the range of 3 to 20.
[1.30] Siloxane copolymer compound according to any one of embodiments [1.1] to [1.25], wherein y has a value in the range of 4 to 15.
[1.31] Siloxane copolymer compound according to any one of embodiments [1.1] to [1.25], wherein y has a value in the range of 5 to 12.
[1.32] Siloxane copolymer compound according to any one of embodiments [1.14] to [1.31], wherein x has a value in the range of from 0.3 to 1.
[1.33] Siloxane copolymer compound according to any one of embodiments [1.14] to [1.31], wherein x has a value in the range of from 0.5 to 1.
[1.34] Siloxane copolymer compound according to any one of embodiments [1.14] to [1.31], wherein x has a value in the range of from 0.7 to 1.
[1.35] Siloxane copolymer compound according to any one of embodiments [1.14] to [1.31], wherein x has a value of 1.
[1.36] Siloxane copolymer compound according to any one of embodiments [1.1] to [1.35], wherein z1 + z2 ≥ 1.
[1.37] Siloxane copolymer compound according to any one of embodiments [1.1] to [1.36], wherein z1 has a value in the range of 5 to 150.
[1.38] Siloxane copolymer compound according to any one of embodiments [1.1] to [1.36], wherein z1 has a value in the range of 10 to 150.
[1.39] Siloxane copolymer compound according to any one of embodiments [1.1] to [1.36], wherein z1 has a value in the range of 20 to 150.
[1.40] Siloxane copolymer compound according to any one of embodiments [1.1] to [1.36], wherein z1 has a value in the range of 25 to 100.
[1.41] Siloxane copolymer compound according to any one of embodiments [1.1] to [1.40], wherein z2 has a value in the range of 0 to 4.
[1.42] Siloxane copolymer compound according to any one of embodiments [1.1] to [1.40], wherein z2 has a value in the range of 0 to 3.
[1.43] Siloxane copolymer compound according to any one of embodiments [1.1] to [1.40], wherein z2 has a value in the range of 0 to 2.
[1.44] Siloxane copolymer compound according to any one of embodiments [1.1] to [1.40], wherein z2 is 0 or 1.
[1.45] Siloxane copolymer compound according to any one of embodiments [1.1] to [1.44], wherein m is 2, 3, or 4.
[1.46] Siloxane copolymer compound according to any one of embodiments [1.1] to [1.44], wherein m is 2.
[1.47] Siloxane copolymer compound according to any one of embodiments [1.1] to [1.46], wherein U is aliphatic.
[1.48] Siloxane copolymer compound according to embodiment [1.47], wherein U has 4 to 16 carbon atoms.
[1.49] Siloxane copolymer compound according to embodiment [1.47], wherein U has 4 to 13 carbon atoms.
[1.50] Siloxane copolymer compound according to embodiment [1.47], wherein U has 6 to 10 carbon atoms.
[1.51] Siloxane copolymer compound according to any one of embodiments [1.1] to [1.43], wherein U comprises aromatic substructures and has 6 to 16 carbon atoms.
[1.52] Siloxane copolymer compound according to any one of embodiments [1.1] to [1.43], wherein U comprises aromatic substructures and has 6 to 14 carbon atoms.
[1.53] Siloxane copolymer compound according to any one of embodiments [1.1] to [1.43], wherein U comprises aromatic substructures and has 6 to 12 carbon atoms.
[1.54] Siloxane copolymer compound according to any one of embodiments [1.1] to [1.43], wherein U comprises aromatic substructures and has 6 to 10 carbon atoms.
[1.55] Siloxane copolymer compound according to any one of embodiments [1.1] to [1.54], wherein U is a hydrocarbon consisting of carbon atoms and hydrogen atoms.
[1.56] Siloxane copolymer compound according to any one of embodiments [1.1] to [1.55], wherein n has a value in the range of 2 to 5.
[1.57] Siloxane copolymer compound according to any one of embodiments [1.1] to [1.55], wherein n has a value in the range of 2 to 4.
[1.58] Siloxane copolymer compound according to any one of embodiments [1.1] to [1.55], wherein n is 2 or 3.
[1.59] Siloxane copolymer compound according to any one of embodiments [1.1] to [1.55], wherein n is 2.
[1.60] Siloxane copolymer compound according to any one of embodiments [1.1] to [1.59], wherein R⁴ contains 2 to 20 carbon atoms.
[1.61] Siloxane copolymer compound according to any one of embodiments [1.1] to [1.59], wherein R⁴ contains 2 to 12 carbon atoms.
[1.62] Siloxane copolymer compound according to any one of embodiments [1.1] to [1.59], wherein R⁴ contains 2 to 8 carbon atoms.
[1.63] Siloxane copolymer compound according to any one of embodiments [1.1] to [1.59], wherein R⁴ contains 2 to 6 carbon atoms.
[1.64] Siloxane copolymer compound according to any one of embodiments [1.1] to [1.59], wherein R⁴ contains 2, 3 or 4 carbon atoms.
[1.65] Siloxane copolymer compound according to any one of embodiments [1.1] to [1.64], wherein R⁴ is aliphatic.
[1.66] Siloxane copolymer compound according to any one of embodiments [1.1] to [1.59], wherein R⁴ is aromatic or contains aliphatic and aromatic substructures.
[1.67] Siloxane copolymer compound according to embodiment [1.66], wherein R⁴ contains 6 to 20 carbon atoms.
[1.68] Siloxane copolymer compound according to any one of embodiments [1.1] to [1.67], wherein R⁴ is a hydrocarbon consisting of carbon atoms and hydrogen atoms.
[1.69] Siloxane copolymer compound according to any one of embodiments [1.1] to [1.65], wherein B3 represents

@1-O-CH₂CH₂-O-@1,

@1-O-CH₂CH₂(CH₃)-O-@1,

@1-O-CH₂-CH(-O@1)-CH₂-O-@1,

@1-O-CH₂-CR⁷(-CH₂-O@1)-CH₂-O-@1,

@1-O-CH₂-C(-CH₂-O@1)₂-CH₂-O-@1,

@1-O-CH₂-CH(-O-Y1)-CH₂-O-@1,

@1-O-CH₂-CH(-O@1)-CH₂-O-Y1,

@1-O-CH₂-CR⁷(-CH₂-O@1)-CH₂-O-Y1,

or any combination of these,
wherein
R⁷ represents methyl, ethyl, n-propyl or i-propyl,
Y1 represents -(EO)₁₀₋₃₀-CH₃, wherein -(EO)₁₀₋₃₀- represents a chain consisting of 10 to 30 ethyleneoxy units.
[1.70] Siloxane copolymer compound according to any one of embodiments [1.1] to [1.65], wherein R⁴ represents a polyether substructure having a molecular weight of 5000 g/mol or less.
[1.71] Siloxane copolymer compound according to any one of embodiments [1.1] to [1.59] and [1.67], wherein B3 represents a substructure

@1-[-O-R⁸-]_{q}O-@1,

wherein
R⁸ each independently is a linear C2-C6 alkylene group or a branched C3-C6 alkylene group, and
q has a value in the range of 2 to 50.
[1.72] Siloxane copolymer compound according to any one of embodiments [1.1] to [1.59], wherein R⁴ represents a polyester substructure having a molecular weight of 5000 g/mol or less.
[1.73] Siloxane copolymer compound according to any one of embodiment [1.1] to [1.46] and [1.72], wherein B3 represents a substructure

@1-[-O-R⁹-O-C(=O)-R¹⁰-C(=O)-]ᵣ-O-@1 ,

wherein
R⁹ each independently is a linear C2-C8 alkylene group, a branched C3-C6 alkylene group or a group having the hydrocarbon substructure of a diol obtainable from a dimerized fatty acid by reducing the carboxyl groups to hydroxyl groups,
R¹⁰ each independently is a bond, a C1-C10 alkylene group, a C6-C10 arylene group, a combination of at least one C6-C10 arylene group and at least one C1-C4 aliphatic alkylene group, or a group having the hydrocarbon substructure of a dimerized fatty acid, and
r has a value in the range of 2 to 50.
[1.74] Siloxane copolymer compound according to embodiment [1.73], wherein R¹⁰ each independently is a C1-C10 alkylene group or a C6 arylene group.
[1.75] Siloxane copolymer compound according to embodiment [1.73], wherein R¹⁰ each independently is a C4-C8 alkylene group or a C6 arylene group.
[1.76] Siloxane copolymer compound according to any one of embodiments [1.73] to [1.75], wherein R⁹ each independently is a linear C4-C8 alkylene group or a branched C4-C6 alkylene group.
[1.77] Siloxane copolymer compound according to any one of embodiments [1.1] to [1.59], wherein R⁴ represents a polycarbonate substructure having a molecular weight of 5000 g/mol or less.
[1.78] Siloxane copolymer compound according to any one of embodiment [1.1] to [1.59] and [1.77], wherein B3 represents a substructure

@1-[-O-R¹¹-O-C(=O)-]ₛ-O-@1,

wherein
R¹¹ each independently is selected from a C2-C10 alkylene group or a C6-C10 arylene group and
s has a value in the range of 2 to 50.
[1.79] Siloxane copolymer compound according to embodiment [1.78], wherein R¹¹ each independently is selected from a C4-C8 alkylene group and s has a value in the range of 10 to 30.
[1.80] Siloxane copolymer compound according to any one of embodiments [1.1] to [1.59], wherein B3 represents a polycaprolactone diol substructure having a molecular weight of 5000 g/mol or less.
[1.81] Siloxane copolymer compound according to any one of embodiment [1.1] to [1.80], wherein B4 has a structure represented by formula (B4a).
[1.82] Siloxane copolymer compound according to any one of embodiment [1.81], wherein p has a value in the range of 2 to 5.
[1.83] Siloxane copolymer compound according to embodiment [1.82], wherein p is 2, 3, or 4.
[1.84] Siloxane copolymer compound according to embodiment [1.82], wherein p is 2 or 3.
[1.85] Siloxane copolymer compound according to embodiment [1.82], wherein p is 2.
[1.86] Siloxane copolymer compound according to any one of embodiments [1.81] to [1.85], wherein R⁵ contains 2 to 20 carbon atoms.
[1.87] Siloxane copolymer compound according to any one of embodiments [1.81] to [1.85], wherein R⁵ contains 2 to 12 carbon atoms.
[1.88] Siloxane copolymer compound according to any one of embodiments [1.81] to [1.85], wherein R⁵ contains 2 to 8 carbon atoms.
[1.89] Siloxane copolymer compound according to any one of embodiments [1.81] to [1.85], wherein R⁵ contains 2 to 6 carbon atoms.
[1.90] Siloxane copolymer compound according to any one of embodiments [1.81] to [1.85], wherein R⁵ contains 2, 3 or 4 carbon atoms.
[1.91] Siloxane copolymer compound according to any one of embodiment embodiments [1.81] to [1.85], wherein R⁵ contains 2 carbon atoms.
[1.92] Siloxane copolymer compound according to any one of embodiments [1.81] to [1.85], wherein R⁵ is aliphatic.
[1.93] Siloxane copolymer compound according to any one of embodiments [1.81] to [1.85], wherein R⁵ is aromatic or contains aliphatic and aromatic substructures.
[1.94] Siloxane copolymer compound according to embodiment [1.93], wherein R⁵ contains 6 to 20 carbon atoms.
[1.95] Siloxane copolymer compound according to any one of embodiments [1.1] to [1.80], wherein B4 has a structure represented by formula (B4b).
[1.96] Siloxane copolymer compound according to embodiment [1.95], wherein u is 1 to 4.
[1.97] Siloxane copolymer compound according to embodiment [1.95], wherein u is 1 to 3.
[1.98] Siloxane copolymer compound according to embodiment [1.95], wherein u is 1 or 2.
[1.99] Siloxane copolymer compound according to embodiment [1.95], wherein u is 1.
[1.100] Siloxane copolymer compound according to any one of embodiments [1.1] to [1.95], wherein R⁶ represents

-R¹²-G1

wherein
R¹² represents a C2-C20 alkylene group and
G1 represents an anionic group, a cationic group or a non-ionic group.
[1.101] Siloxane copolymer compound according to embodiment [1.100], wherein R¹² represents a C2-C10 alkylene group.
[1.102] Siloxane copolymer compound according to embodiment [1.100], wherein R¹² represents a C2-C6 alkylene group.
[1.103] Siloxane copolymer compound according to any one of embodiments [1.100] to [1.102], wherein G1 represents a sulfonate group -SO₃⁻, an ammonium group -N⁺(R¹³)₂H, wherein each R¹³ independently represents a C1-C6 alkyl group or a group containing aliphatic and aromatic substructures and having 6 to 14 carbon atoms, or a group -(CH₂CH₂O)ₑ-CH₃, wherein e is 2 to 50.
[1.104] Siloxane copolymer compound according to any one of embodiments [1.1] to [1.99], wherein R⁶ represents hydrogen.
[1.105] Siloxane copolymer compound according to any one of embodiments [1.1] to [1.99], wherein R⁶ represents a C1-C10 alkyl group.
[1.106] Siloxane copolymer compound according to any one of embodiments [1.1] to [1.99], wherein R⁶ represents a C1-C6 alkyl group.
[1.107] Siloxane copolymer compound according to any one of embodiments [1.1] to [1.99], wherein R⁶ represents a C1-C4 alkyl group.
[1.108] Siloxane copolymer compound according to any one of embodiments [1.1] to [1.99], wherein B4 represents

@1-HN-CH₂CH₂-NH-@1,

@1-HN-CH₂CH₂(CH₃)-NH-@1,

@1-HN-CH₂-CH(-NH@1)-CH₂-CH2-SO₃⁻ M ,

wherein M represents an alkali metal cation or an ammonium cation,

(@1-)NH-[-CH₂-CH₂-NH(-@1)-]ᵤ-CH₂-CH₂-NH(-@1),

wherein u is 1, 2, or 3.
[1.109] Siloxane copolymer compound according to any one of embodiments [1.1] to [1.108], wherein the ratio $\left(xB1*e2*\left(2+z2\right)+xB3*n\right) / \left(xB2*m\right)$
is in the range of 1.00 : 1.25 to 1.0 : 3.00,
wherein
xB1 represents the number of repeating units B1 present in the siloxane copolymer compound relative to the total amount of repeating units B1, B2, B3, and B4,
xB2 represents the number of repeating units B2 present in the siloxane copolymer compound relative to the total amount of repeating units B1, B2, B3, and B4,
xB3 represents the number of repeating units B3 present in the siloxane copolymer compound relative to the total amount of repeating units B1, B2, B3, and B4,
e2 and z2 each have the same meaning as defined hereinabove with respect to the structure of repeating unit B1,
m has the same meaning as defined hereinabove with respect to the structure of repeating unit B2, and
n has the same meaning as defined hereinabove with respect to the structure of repeating unit B3.
[1.110] Siloxane copolymer compound according to embodiment [1.109], wherein the ratio $\left(xB1*e2*\left(2+z2\right)+xB3*n\right) / \left(xB2*m\right)$ is in the range of 1.00 : 1.50 to 1.0 : 2.70.
[1.111] Siloxane copolymer compound according to embodiment [1.109], wherein the ratio $\left(xB1*e2*\left(2+z2\right)+xB3*n\right) / \left(xB2*m\right)$ is in the range of 1.00 : 1.70 to 1.0 : 2.40.
[1.112] Siloxane copolymer compound according to embodiment [1.109], wherein the ratio $\left(xB1*e2*\left(2+z2\right)+xB3*n\right) / \left(xB2*m\right)$ is in the range of 1.00 : 1.80 to 1.0 : 2.30.
[1.113] Siloxane copolymer compound according to any one of embodiments [1.1] to [1.112],
wherein the number of covalent bonding sites @1 in said substructure B3 (expressed as xB3 * n) relative to the total number of covalent bonding sites @1 in substructures B1 and B3 (expressed as (xB1 * e2 * (2 + z2) + xB3 * n) is 35 % or less,
wherein
xB1 represents the number of repeating units B1 present in the siloxane copolymer compound relative to the total amount of repeating units B1, B2, B3, and B4,
xB3 represents the number of repeating units B3 present in the siloxane copolymer compound relative to the total amount of repeating units B1, B2, B3, and B4,
e2 and z2 each have the same meaning as defined hereinabove with respect to the structure of repeating unit B1, and
n has the same meaning as defined hereinabove with respect to the structure of repeating unit B3.
[1.114] Siloxane copolymer compound according to embodiment [1.113], wherein the number of covalent bonding sites @1 in said substructure B3 (expressed as xB3 * n) relative to the total number of covalent bonding sites @1 in substructures B1 and B3 (expressed as (xB1 * e2 * (2 + z2) + xB3 * n) is 30 % or less.
[1.115] Siloxane copolymer compound according to embodiment [1.113], wherein the number of covalent bonding sites @1 in said substructure B3 (expressed as xB3 * n) relative to the total number of covalent bonding sites @1 in substructures B1 and B3 (expressed as (xB1 * e2 * (2 + z2) + xB3 * n) is 25 % or less.
[1.116] Siloxane copolymer compound according to embodiment [1.113], wherein the number of covalent bonding sites @1 in said substructure B3 (expressed as xB3 * n) relative to the total number of covalent bonding sites @1 in substructures B1 and B3 (expressed as (xB1 * e2 * (2 + z2) + xB3 * n) is 20 % or less.
[1.117] Siloxane copolymer compound according to any one of embodiments [1.1] to [1.116], wherein xB4 > 0.
[1.118] Siloxane copolymer compound according to any one of embodiments [1.1] to [1.116], wherein xB3 > 0 and xB4 > 0.
[1.119] Siloxane copolymer compound according to any one of embodiments [1.1] to [1.117], wherein xB3 = 0.
[1.120] Siloxane copolymer compound according to any one of embodiments [1.1] to [1.118], wherein substructure B4 is present in an amount expressed as xB4 = xB4a + xB4b such that the ratio $\left(xB4a*p+xB4b*\left(u+2\right)\right) / \left(xB2*m-\left(xB1*e2*\left(2+z2\right)+xB3*n\right)\right)$
is in the range of 0.80 to 2.30, wherein
xB1 represents the number of repeating units B1 present in the siloxane copolymer compound relative to the total amount of repeating units B1, B2, B3, and B4,
xB2 represents the number of repeating units B2 present in the siloxane copolymer compound relative to the total amount of repeating units B1, B2, B3, and B4,
xB3 represents the number of repeating units B3 present in the siloxane copolymer compound relative to the total amount of repeating units B1, B2, B3, and B4,
xB4 represents the number of repeating units B4 present in the siloxane copolymer compound relative to the total amount of repeating units B1, B2, B3, and B4,
xB4a represents the number of repeating units B4a present in the siloxane copolymer compound relative to the total amount of repeating units B1, B2, B3, and B4,
xB4b represents the number of repeating units B4b present in the siloxane copolymer compound relative to the total amount of repeating units B1, B2, B3, and B4, e2 and z2 each are as defined in hereinabove in relation to substructure B1, m is as defined in hereinabove in relation to substructure B2,
n is as defined in hereinabove in relation to substructure B3, and p and u are as defined hereinabove in relation to substructure B4.
[1.121] Siloxane copolymer compound according to embodiment [1.120], wherein substructure B4 is present in an amount expressed as xB4 = xB4a + xB4b such that the ratio $\left(xB4a*p+xB4b*\left(u+2\right)\right) / \left(xB2*m-\left(xB1*e2*\left(2+z2\right)+xB3*n\right)\right)$ is in the range of 0.90 to 1.60.
[1.122] Siloxane copolymer compound according to embodiment [1.120], wherein substructure B4 is present in an amount expressed as xB4 = xB4a + xB4b such that the ratio $\left(xB4a*p+xB4b*\left(u+2\right)\right) / \left(xB2*m-\left(xB1*e2*\left(2+z2\right)+xB3*n\right)\right)$ is in the range of 1.00 to 1.40.
[1.123] Siloxane copolymer compound according to any one of embodiments [1.1] to [1.122],
wherein the percentage of branching %B is 20 % or less or, preferably, 10 % or less,
wherein the percentage of branching %B is calculated as %B = ((xB1 * e2 * (2 + z2) + xB2 * m + xB3 * n + xB4a * p + xB4b * (u + 2)) / (2 * (xB1 + xB2 + xB3 + xB4)) - 1) * 100.
[1.124] Siloxane copolymer compound according to embodiment [1.123], wherein the percentage of branching %B is 8 % or less.
[1.125] Siloxane copolymer compound according to embodiment [1.123], wherein the percentage of branching %B is 6 % or less.
[1.126] Siloxane copolymer compound according to embodiment [1.123], wherein the percentage of branching %B is 5 % or less.
[1.127] Siloxane copolymer compound according to embodiment [1.123], wherein the percentage of branching %B is 4 % or less.
[1.128] Siloxane copolymer compound according to any one of embodiments [1.1] to [1.122], wherein z2 = 0, m = 2, n = 2, and B4 represents a structure represented by B4a and p = 2.
[1.129] Siloxane copolymer compound according to any one of embodiments [1.1] to [1.128], wherein the siloxane copolymer compound is in the form of a solid such as in the form of a powder, pellets or beads.
[1.130] Siloxane copolymer compound according to any one of embodiments [1.1] to [1.128], wherein the siloxane copolymer compound is in the form of solution in an solvent such as acetone.
[1.131] Siloxane copolymer compound according to any one of embodiments [1.1] to [1.130], wherein the siloxane copolymer compound is obtainable by a method according to any one of embodiments [2.1] to [2.29].
[2.1] Method of preparing a siloxane copolymer compound comprising the repeating units B1, B2 and at least one of B3 and B4, wherein each occurrence of B1, B2, B3, and B4 independently has the meaning defined hereinabove under any one of items [1.1] to [1.130] comprising
(a) a first step of reacting
- an isocyanate compound B2r of the general formula U[-NCO]ₘ,
with
- a siloxane compound B1r having a siloxane structure consisting of substructures B1ar, B1b and B1cr represented by the following formulae

| | | |
|---|---|---|
| B1ar | [(R¹)₂(Ar)Si-] | of which t units are present, |
| B1b | [-(R¹)₂Si-] | of which z1 units are present, |
| B1cr | [-(R¹)(Ar)Si-] | of which z2 units are present, |

wherein
the silicon atom present in each of the substructures B1ar, B1b and B1cr is linked to the silicon atom of an adjacent substructure by means of an oxygen atom,
Ar is @Si-R²-(-O-R¹⁴-)ₑ₁-{-O-[(EOₓ)/(AO)₁₋ₓ)]_{y}-H}ₑ₂,
@Si is a site of covalent bonding to the silicon atom of substructure B1a or B1c,
and, optionally,
- a polyol compound B3r of the general formula R⁴[-OH]ₙ
and
(b) a second step of reacting the product obtained from the first step with a polyamine B4r of the general formula (B4ar) or (B4br)

| | |
|---|---|
| (B4a) | R⁵[-NHR⁶]ₚ |
| (B4b) | R⁶HN-[-CH₂-CH₂-NHR⁶-]ᵤ-CH₂-CH₂-NHR⁶ ; |

wherein each of R¹, R², R⁴, R⁵, R⁶, R¹⁴, t, z1, z2, e1, e2, m, n, p, u, x, y have the meanings as defined above under any one of items [1.1] to [1.117].
[2.2] Method of preparing a siloxane copolymer compound according to embodiment [2.1], wherein a solvent is present in the first and second step.
[2.3] Method of preparing a siloxane copolymer compound according to embodiment [2.1], wherein the solvent has a boiling point in the range of 40 °C to 80 °C at a pressure of 1013 mbar.
[2.4] Method of preparing a siloxane copolymer compound according to embodiment [2.1], wherein the solvent has a boiling point in the range of 45 °C to 70 °C at a pressure of 1013 mbar.
[2.5] Method of preparing a siloxane copolymer compound according to embodiment [2.1], wherein the solvent has a boiling point in the range of 50 °C to 60 °C at a pressure of 1013 mbar.
[2.6] Method of preparing a siloxane copolymer compound according to any one of embodiments [2.2] to [2.5], wherein the solvent is acetone, butanone, tetrahydrofuran, dioxane or a combination of these.
[2.7] Method of preparing a siloxane copolymer compound according to any one of embodiments [2.2] to [2.6], wherein the reaction steps are carried out at a temperature in the range of 20 °C to the boiling point of the solvent.
[2.8] Method of preparing a siloxane copolymer compound according to any one of embodiments [2.2] to [2.6], wherein the reaction steps are carried out at a temperature in the range of 40 °C to the boiling point of the solvent.
[2.9] Method of preparing a siloxane copolymer compound according to any one of embodiments [2.1] to [2.8], wherein the reaction steps are carried out in the presence of a catalyst.
[2.10] Method of preparing a siloxane copolymer compound according to any one of embodiments [2.1] to [2.9], wherein the ratio $\left(xB1r*e2*\left(2+z2\right)+xB3r*n\right) / \left(xB2r*m\right)$
is in the range of 1.00 : 1.25 to 1.0 : 3.00,
wherein
xB1r represents the molar amount of compound B1r present in the reaction mixture relative to the total molar amount of compounds B1r, B2r, B3r, and B4r,
xB2r represents the number of repeating units B2r present in the reaction mixture relative to the total molar amount of compounds B1r, B2r, B3r, and B4r,
xB3r represents the number of repeating units B3r present in the reaction mixture relative to the total molar amount of compounds B1r, B2r, B3r, and B4r,
e2 and z2 each have the same meaning as defined hereinabove with respect to the structure of repeating unit B1,
m has the same meaning as defined hereinabove with respect to the structure of repeating unit B2, and
n has the same meaning as defined hereinabove with respect to the structure of repeating unit B3.
[2.11] Method of preparing a siloxane copolymer compound according to embodiment [2.10], wherein the ratio $\left(xB1r*e2*\left(2+z2\right)+xB3r*n\right) / \left(xB2r*m\right)$ is in the range of 1.00 : 1.50 to 1.0 : 2.70.
[2.12] Method of preparing a siloxane copolymer compound according to embodiment [2.10], wherein the ratio $\left(xB1r*e2*\left(2+z2\right)+xB3r*n\right) / \left(xB2r*m\right)$ is in the range of 1.00 : 1.70 to 1.0 : 2.40.
[2.13] Method of preparing a siloxane copolymer compound according to embodiment [2.10], wherein the ratio $\left(xB1r*e2*\left(2+z2\right)+xB3r*n\right) / \left(xB2r*m\right)$ is in the range of 1.00 : 1.80 to 1.0 : 2.30.
[2.14] Method of preparing a siloxane copolymer compound according to any one of embodiments [2.1] to [2.13], wherein the number of hydroxyl groups in said compound B3r (expressed as xB3r * n) relative to the total number of hydroxyl groups in compounds B1r and B3r (expressed as (xB1r * e2 * (2 + z2) + xB3r * n) is 35 % or less,
wherein
xB1r represents the molar amount of compound B1r present in the reaction mixture relative to the total molar amount of compounds B1r, B2r, B3r, and B4r,
xB3r represents the molar amount of compound B3r present in the reaction mixture relative to the total molar amount of compounds B1r, B2r, B3r, and B4r,
e2 and z2 each have the same meaning as defined hereinabove with respect to the structure of repeating unit B1, and
n has the same meaning as defined hereinabove with respect to the structure of repeating unit B3.
[2.15] Method of preparing a siloxane copolymer compound according to embodiment [2.14], wherein the number of hydroxyl groups in said compound B3r (expressed as xB3r * n) relative to the total number of hydroxyl groups in compounds B1r and B3r (expressed as (xB1r * e2 * (2 + z2) + xB3r * n) is 30 % or less.
[2.16] Method of preparing a siloxane copolymer compound according to embodiment [2.14], wherein the number of hydroxyl groups in said compound B3r (expressed as xB3r * n) relative to the total number of hydroxyl groups in compounds B1r and B3r (expressed as (xB1r * e2 * (2 + z2) + xB3r * n) is 25 % or less.
[2.17] Method of preparing a siloxane copolymer compound according to embodiment [2.14], wherein the number of hydroxyl groups in said compound B3r (expressed as xB3r * n) relative to the total number of hydroxyl groups in compounds B1r and B3r (expressed as (xB1r * e2 * (2 + z2) + xB3r * n) is 20 % or less.
[2.18] Method of preparing a siloxane copolymer compound according to any one of embodiments [2.1] to [2.17], wherein xB4r > 0.
[2.19] Method of preparing a siloxane copolymer compound according to any one of embodiments [2.1] to [2.17], wherein xB3r > 3 and xB4r > 0.
[2.20] Method of preparing a siloxane copolymer compound according to any one of embodiments [2.1] to [2.18], wherein xB3r = 0.
[2.21] Method of preparing a siloxane copolymer compound according to any one of embodiments [2.1] to [2.20], wherein compound B4r is present in an amount expressed as xB4r = xB4ar + xB4br such that the ratio $\left(xB4ar*p+xB4br*\left(u+2\right)\right) - \left(xB2r*m-\left(xB1r*e2*\left(2+z2\right)+xB3r*n\right)\right)$
is in the range of 0.80 to 2.30, wherein
xB1r represents the molar amount of compound B1r present in the reaction mixture relative to the total amount of compounds B1r, B2r, B3r, and B4r,
xB2r represents the molar amount of compound B2r present in the siloxane copolymer compound relative to the total amount of compounds B1r, B2r, B3r, and B4r,
xB3r represents the molar amount of compound B3r present in the siloxane copolymer compound relative to the total amount of compounds B1r, B2r, B3r, and B4r,
xB4r represents the molar amount of compound B4r present in the siloxane copolymer compound relative to the total amount of compounds B1r, B2r, B3r, and B4r,
xB4ar represents the molar amount of compound B4ar present in the siloxane copolymer compound relative to the total amount of compounds B1r, B2r, B3r, and B4r,
xB4br represents the molar amount of compound B4br present in the siloxane copolymer compound relative to the total amount of compounds B1r, B2r, B3r, and B4r,
e2 and z2 each are as defined in hereinabove in relation to substructure B1,
m is as defined in hereinabove in relation to substructure B2,
n is as defined in hereinabove in relation to substructure B3, and p and u are as defined hereinabove in relation to substructure B4.
[2.22] Method of preparing a siloxane copolymer compound according to embodiment [2.21], wherein compound B4r is present in an amount expressed as xB4r = xB4ar + xB4br such that the ratio $\left(xB4a*p+xB4b*\left(u+2\right)\right) / \left(xB2*m-\left(xB1*e2*\left(2+z2\right)+xB3*n\right)\right)$ is in the range of 0.90 to 1.60.
[2.23] Method of preparing a siloxane copolymer compound according to embodiment [2.21], wherein compound B4r is present in an amount expressed as xB4r = xB4ar + xB4br such that the ratio $\left(xB4a*p+xB4b*\left(u+2\right)\right) / \left(xB2*m-\left(xB1*e2*\left(2+z2\right)+xB3*n\right)\right)$ is in the range of 1.00 to 1.40.
[2.24] Method of preparing a siloxane copolymer compound according to any one of embodiments [2.1] to [2.23], wherein the percentage of branching %B is 20 % or less or, preferably, 10 % or less, wherein the percentage of branching %B is calculated as %B = ((xB1r * e2 * (2 + z2) + xB2r * m + xB3r * n + xB4ar * p + xB4br * (u + 2)) / (2 * (xB1r + xB2r + xB3r + xB4r)) - 1) * 100.
[2.25] Method of preparing a siloxane copolymer compound according to embodiment [2.24], wherein the percentage of branching %B is 8 % or less.
[2.26] Method of preparing a siloxane copolymer compound according to embodiment [2.24], wherein the percentage of branching %B is 6 % or less.
[2.27] Method of preparing a siloxane copolymer compound according to embodiment [2.24], wherein the percentage of branching %B is 5 % or less.
[2.28] Method of preparing a siloxane copolymer compound according to embodiment [2.24], wherein the percentage of branching %B is 4 % or less.
[2.29] Method of preparing a siloxane copolymer compound according to any one of embodiments [2.1] to [2.23], wherein z2 = 0, m = 2, n = 2, and compound B4r is a compound represented by B4ar and p = 2.
[3.1] Aqueous dispersion comprising
(a) the siloxane copolymer compound as defined in any one of embodiments [1.1] to [1.131] and
(b) water.
[3.2] Aqueous dispersion according to embodiment [3.1], containing the siloxane copolymer compound in an amount of 20 wt.-% to 70 wt.-%, relative to the total weight of the dispersion.
[3.3] Aqueous dispersion according to embodiment [3.1], containing the siloxane copolymer compound in an amount of 30 wt.-% to 65 wt.-%, relative to the total weight of the dispersion.
[3.4] Aqueous dispersion according to embodiment [3.1], containing the siloxane copolymer compound in an amount of 40 wt.-% to 60 wt.-%, relative to the total weight of the dispersion.
[3.5] Aqueous dispersion according to any one of embodiments [3.1] to [3.4], wherein the aqueous dispersion further contains an auxiliary agent.
[3.6] Aqueous dispersion according to embodiment [3.5], wherein the auxiliary agent is selected from an organic solvent miscible with water.
[3.7] Aqueous dispersion according to embodiment [3.5], wherein the auxiliary agent is selected from methanol, ethanol, n-propanol, i-propanol, acetone, butanone, tetrahydrofuran, dioxane or a combination of these.
[3.8] Aqueous dispersion according to any one of embodiments [3.1] to [3.7], wherein the siloxane copolymer compound and water amount to 90 wt.-% or more of the aqueous dispersion.
[3.9] Aqueous dispersion according to any one of embodiments [3.1] to [3.7], wherein the siloxane copolymer compound and water amount to 95 wt.-% or more of the aqueous dispersion.
[3.10] Aqueous dispersion according to any one of embodiments [3.1] to [3.7], wherein the siloxane copolymer compound and water amount to 97 wt.-% or more of the aqueous dispersion.
[3.11] Aqueous dispersion according to any one of embodiments [3.1] to [3.7], wherein the siloxane copolymer compound and water amount to 99 wt.-% or more of the aqueous dispersion.
[3.12] Aqueous dispersion according to any one of embodiments [3.1] to [3.12], wherein the aqueous dispersion further contains an adjuvant.
[3.13] Aqueous dispersion according to embodiment [3.12], wherein the adjuvant comprises a foam suppressing agent.
[3.14] Aqueous dispersion according to embodiment [3.12] or [3.13], wherein the adjuvant is present in an amount of 0.5 wt.-% or less, relative to the total weight of the components of the aqueous dispersion.
[3.15] Aqueous dispersion according to embodiment [3.12] or [3.13], wherein the adjuvant is present in an amount of 0.1 wt.-% or less, relative to the total weight of the components of the aqueous dispersion.
[3.16] Aqueous dispersion according to embodiment [3.12] or [3.13], wherein the adjuvant is present in an amount of 0.05 wt.-% or less, relative to the total weight of the components of the aqueous dispersion.
[3.17] Aqueous dispersion according to any one of embodiments [3.13] to [3.15], wherein the foam suppressing agent is a siloxane compound.
[3.18] Aqueous dispersion according to any one of embodiments [3.13] to [3.15], wherein the foam suppressing agent is a polydimethylsiloxane compound.
[3.19] Aqueous dispersion according to any one of embodiments [3.1] to [3.18], wherein the aqueous dispersion is obtainable by a method defined as any one of embodiments [4.1] to [4.23].
[4.1] Method of preparing an aqueous dispersion comprising the steps of
(a) preparing a mixture of
   - a solution of a siloxane copolymer compound, which siloxane copolymer compound is as defined in any one of embodiments [1.1] to [1.131] in an organic solvent, which organic solvent is miscible with water,
   - optionally an adjuvant,
      and
   - water,
      and
(b) removing at least a part of the organic solvent from the mixture prepared in step (a).
[4.2] Method of preparing an aqueous dispersion according to embodiment [4.1], wherein the organic solvent has a boiling point in the range of 40 °C to 80 °C at a pressure of 1013 mbar.
[4.3] Method of preparing an aqueous dispersion according to embodiment [4.1] or [4.2], wherein the organic solvent is selected from methanol, ethanol, n-propanol, i-propanol, acetone, butanone, tetrahydrofuran, dioxane or a combination of these.
[4.4] Method of preparing an aqueous dispersion according to any one of embodiments [4.1] to [4.3], wherein the content of the siloxane copolymer compound in the solution is in the range of 30 wt.-% to 80 wt.-%, relative to the total weight of the solution.
[4.5] Method of preparing an aqueous dispersion according to any one of embodiments [4.1] to [4.3], wherein the content of the siloxane copolymer compound in the solution is in the range of 40 wt.-% to 70 wt.-%, relative to the total weight of the solution.
[4.6] Method of preparing an aqueous dispersion according to any one of embodiments [4.1] to [4.3], wherein the content of the siloxane copolymer compound in the solution is in the range of 45 wt.-% to 65 wt.-%, relative to the total weight of the solution.
[4.7] Method of preparing an aqueous dispersion according to any one of embodiments [4.1] to [4.6], wherein the amount of water in step (a) is in the range of 50 wt.-% to 100 wt.-%, relative to the total weight of the solution used in step (a).
[4.8] Method of preparing an aqueous dispersion according to any one of embodiments [4.1] to [4.6], wherein the amount of water in step (a) is in the range of 60 wt.-% to 90 wt.-%, relative to the total weight of the solution used in step (a).
[4.9] Method of preparing an aqueous dispersion according to any one of embodiments [4.1] to [4.6], wherein the amount of water in step (a) is in the range of 65 wt.-% to 85 wt.-%, relative to the total weight of the solution used in step (a).
[4.10] Method of preparing an aqueous dispersion according to any one of embodiments [4.1] to [4.9], wherein the adjuvant is present in an amount of 0.5 wt.-% or less relative to the total weight of the components of the dispersion.
[4.11] Method of preparing an aqueous dispersion according to any one of embodiments [4.1] to [4.9], wherein the adjuvant is present in an amount of 0.1 wt.-% or less relative to the total weight of the components of the dispersion.
[4.12] Method of preparing an aqueous dispersion according to any one of embodiments [4.1] to [4.9], wherein the adjuvant is present in an amount of 0.05 wt.-% or less relative to the total weight of the components of the dispersion.
[4.13] Method of preparing an aqueous dispersion according to any one of embodiments [4.1] to [4.13], wherein the adjuvant comprises a foam suppressing agent.
[4.14] Method of preparing an aqueous dispersion according to embodiment [4.13], wherein the foam suppressing agent is a siloxane compound.
[4.15] Method of preparing an aqueous dispersion according to embodiment [4.13], wherein the foam suppressing agent is a polydimethylsiloxane compound.
[4.16] Method of preparing an aqueous dispersion according to any one of embodiments [4.1] to [4.15], wherein in step (b) at least 70 wt.-% of the organic solvent present in the solution is removed.
[4.17] Method of preparing an aqueous dispersion according to any one of embodiments [4.1] to [4.15], wherein in step (b) at least 80 wt.-% of the organic solvent present in the solution is removed.
[4.18] Method of preparing an aqueous dispersion according to any one of embodiments [4.1] to [4.15], wherein in step (b) at least 90 wt.-% of the organic solvent present in the solution is removed.
[4.19] Method of preparing an aqueous dispersion according to any one of embodiments [4.1] to [4.15], wherein in step (b) at least 95 wt.-% of the organic solvent present in the solution is removed.
[4.20] Method of preparing an aqueous dispersion according to any one of embodiments [4.1] to [4.19], wherein in step (b) the organic solvent is removed under a pressure of 800 mbar or less.
[4.21] Method of preparing an aqueous dispersion according to any one of embodiments [4.1] to [4.19], wherein in step (b) the organic solvent is removed under a pressure of 600 mbar or less.
[4.22] Method of preparing an aqueous dispersion according to any one of embodiments [4.1] to [4.21], wherein in step (b) the organic solvent is removed at a temperature of 30 °C or higher.
[4.23] Method of preparing an aqueous dispersion according to any one of embodiments [4.1] to [4.21], wherein in step (b) the organic solvent is removed at a temperature of 40 °C or higher.
[5.1] Release liner comprising
(a) a base and
(b) a layer of the siloxane copolymer compound as defined in any one of embodiments [1.1] to [1.131].
[5.2] Release liner according to embodiment [5.1], wherein the base is a cellulose material.
[5.3] Release liner according to embodiment [5.1], wherein the base is paper.
[5.4] Release liner according to embodiment [5.3], wherein the paper has an area weight in the range of 50 to 150 g/m2.
[5.5] Release liner according to embodiment [5.3], wherein the paper has an area weight in the range of 70 to 130 g/m2.
[5.6] Release liner according to embodiment [5.3], wherein the paper has an area weight in the range of 80 to 120 g/m2.
[5.7] Release liner according to any one of embodiments [5.1] to [5.6], wherein the layer of the siloxane copolymer compound has a thickness in the range of 1 to 30 µm.
[5.8] Release liner according to any one of embodiments [5.1] to [5.6], wherein the layer of the siloxane copolymer compound has a thickness in the range of 1 to 20 µm.
[5.9] Release liner according to any one of embodiments [5.1] to [5.6], wherein the layer of the siloxane copolymer compound has a coating weight in the range of 1 to 10 g/m².
[5.10] Release liner according to any one of embodiments [5.1] to [5.6], wherein the layer of the siloxane copolymer compound has a coating weight in the range of 2 to 5 g/m².
[5.11] Release liner according to any one of embodiments [5.1] to [5.6], wherein the release liner is obtainable by a method as defined under any one of embodiments [6.1] to [6.13].
[6.1] Method of preparing a release liner as defined in any one of embodiments [5.1] to [5.10] comprising the steps of
(a) applying an aqueous dispersion as defined in any one of embodiments [3.1] to [3.19] to a surface of a base, and
(b) allowing the water and any organic solvent, which can be optionally present, to evaporate from said dispersion.
[6.2] Method of preparing a release liner according to embodiment [6.1], wherein the base is a cellulose material.
[6.3] Method of preparing a release liner according to embodiment [6.1], wherein the base is paper.
[6.4] Method of preparing a release liner according to embodiment [6.3], wherein the paper has an area weight in the range of 50 to 150 g/m2.
[6.5] Method of preparing a release liner according to embodiment [6.3], wherein the paper has an area weight in the range of 70 to 130 g/m2.
[6.6] Method of preparing a release liner according to embodiment [6.3], wherein the paper has an area weight in the range of 80 to 120 g/m2.
[6.7] Method of preparing a release liner according to any one of embodiments [6.1] to [6.6], wherein the amount of the aqueous dispersion applied to said surface of the base is such that the dry coating amount is in the range of 1 g/m2 to 10 g/m2.
[6.8] Method of preparing a release liner according to any one of embodiments [6.1] to [6.6], wherein the amount of the aqueous dispersion applied to said surface of the base is such that the dry coating amount is in the range of 2 g/m2 to 5 g/m2.
[6.9] Method of preparing a release liner according to any one of embodiments [6.1] to [6.8], wherein step (b) is carried out at a temperature in the range of 70 °C to 130 °C.
[6.10] Method of preparing a release liner according to any one of embodiments [6.1] to [6.8], wherein step (b) is carried out at a temperature in the range of 80 °C to 120 °C.
[6.11] Method of preparing a release liner according to any one of embodiments [6.1] to [6.10], wherein step (b) is carried out over a period time in the range of 1 to 5 minutes.
[6.12] Method of preparing a release liner according to any one of embodiments [6.1] to [6.10], wherein step (b) is carried out over a period time in the range of 1 to 4 minutes.
[6.13] Method of preparing a release liner according to any one of embodiments [6.1] to [6.10], wherein step (b) is carried out over a period time in the range of 2 to 3 minutes.
[7.1] Adhesive article comprising in this order
(i) an article having a surface,
(ii) a layer of an adhesive on the surface of said article, which layer has a thickness in the range of 5-500 µm,
(iii) a layer of a siloxane copolymer compound as defined in any one of embodiments [1.1] to [1.131], which layer has a thickness in the range of 1-30 µm, and
(iv) a base.

### First aspect:

According the first aspect of the invention, there is provided a siloxane copolymer compound comprising the repeating units B1, B2 and at least one of B3 and B4, wherein each of B1, B2, B3, and B4 has the meaning set out in the following.

### - Siloxane substructure B1

B1 has a siloxane structure consisting of substructures B1a to B1c, which are represented by the following formulae

| | | |
|---|---|---|
| B1a | [(R¹)₂(A)Si-] | of which t units are present, |
| B1b | [-(R¹)₂Si-] | of which z1 units are present, and |
| B1c | [-(R¹)(A)Si-] | of which z2 units are present. |

The substructure B1 is derived from a siloxane, i.e. the silicon atom present in each of the substructures B1a to B1c is linked to the silicon atom of an adjacent substructure by means of an oxygen atom. The siloxane substructure B1 contains 2 terminal units B1a and, optionally, up to 200 central units B1b and/or up to 20 central units B1c. When units B1b and/or B1c are present, they can be present in a statistical arrangement or in a block arrangement.

In preferred embodiments, z1 + z2 are equal to or greater than 1, i.e. the siloxane substructure B1 contains at least one of units B1b and B1c. Likewise, it is preferred that z1 has a value in the range of 5 to 150, in the range of 10 to 150, in the range of 20 to 150 or in the range of 25 to 100 and/or z2 has a value in the range of 0 to 4, 0 to 3, 0 to 2, or 0 to 1.

The substituent R¹ present on the silicon atom of each of the units B1a to B1c is a C1-C30 hydrocarbon group and can be the same or different on each occurrence, i.e. siloxane substructure B1 can contain different substituents R¹. Preferably, the substituent R¹ is a C1-C12 hydrocarbon group, more preferably a C1-C7 hydrocarbon group. The structure of the hydrocarbon group of substituent R¹ is not particularly limited and can comprise an aromatic substructure, also in combination with an aliphatic substructure, which aliphatic substructure can be linear or branched, or can be a linear or branched aliphatic substructure. In particularly preferred embodiments, the substituent R¹ is a linear or branched C1-C6 alkyl group, such as methyl, ethyl, n-propyl, i-propyl, n-butyl, i-butyl, sec-butyl, tert-butyl, of which methyl is preferred.

The substituent A present on the silicon atom of the units B1a and B1c is @Si-R²-(-O-R¹⁴-)ₑ₁-{-O-[(EOₓ)/(AO)₁₋ₓ)]_{y}-@1}ₑ₂, wherein @Si is a site of covalent bonding to the silicon atom of substructure B1a or B1c and @1 is a site of covalent bonding, namely a site, at which a covalent bond with a site marked with @2 (which is contained in isocyanate-derived substructure B2 as also set out hereinbelow) is present.

R² is a linear or branched C2-C8 alkylene group, EO represents a -CH₂-CH₂-O- group, AO represents a -CH₂-CH(R³)-O- group or a -CH(R³)-CH₂-O- group, and R³ represents a linear or branched C1-C4 alkyl group. [(EOₓ)/(AO)₁₋ₓ)]_{y} represents a substructure in which EO represents an ethyleneoxy group, whereas AO represents an alkyleneoxy group, i.e. an ethyleneoxy group having substituent R³. As AO can represent a -CH₂-CH(R³)-O- group as well as a -CH(R³)-CH₂-O- group, the R³ groups present in a block of several AO units can be arranged in statistical or regular manner. While R³ generally represents a linear or branched C1-C4 alkyl group, it is preferred that R³ is a linear C1-C4 alkyl group, preferably a linear C1-C3 alkyl group, such as methyl, ethyl, n-propyl or i-propyl. More preferably, R3 is a methyl group. While linking group R² generally is a linear or branched C2-C8 alkylene group, it is preferred that R² is a linear or branched C3-C6 alkylene group and it is more preferred that R² is a linear C3 alkylene group, i.e. n-propyl. Parameter x in the formula [(EOₓ)/(AO)₁₋ₓ)]_{y} indicates the molar ratio of EO and AO groups and can have a value in the range of 0 to 1. When x is 0, no EO groups are present and the substructure consists of AO groups. When x is 1, no AO groups are present and the substructure consists of EO groups. The total number of EO groups and AO groups is indicated by means of parameter y and can be in the range of 0 to 100. In preferred embodiments, x has a value in the range of from 0.3 to 1, more preferably 0.5 to 1, still more preferably 0.7 to 1. It is particularly preferred that x has a value of 1. In preferred embodiments, y has a value in the range of 1 to 50, such as in the range of 2 to 30, in the range of 3 to 20, or in the range of 4 to 15, more preferably in the range of 5 to 15. For instance, in some particularly preferred embodiments, y has a value of 1 and x has a value of 1. In alternative preferred embodiments, y has a value of 0, i.e. no EO groups or AO groups are present in substituent A.

In exemplary embodiments, substituent A can have a structure A1, wherein y = 1, x = 1, and R² = n-propyl, which could be represented by
A1 @Si-(CH₂)₃-O-CH₂CH₂-O-@1,
or a structure A2, wherein R² = n-propyl, y = 11 and x = 1, which could be represented by A2 @Si-(CH₂)₃-O-(-CH₂CH₂-O-)₁₁-@1.

That is, depending on the meaning of e1, e2 and R¹⁴ the siloxane structure B1 can contain in units B1a and/or B1c substructures derived from allyl alcohol, trimethylolethane monoallylether, trimethylolpropane monoallylether, erythritol monoallylether and pentaerythritol monoallylether as well as their ethoxylated and/or alkoxylated analoga.

As indicated by means of parameter t = 2, each siloxane substructure B1 has at least 2 substituents A, namely in terminal units B1a, each of which comprises a site marked with @1, at which a covalent bond with a site marked with @2 (which is contained in isocyanate-derived substructure B2 as also set out hereinbelow) is present. Since each substituent A contains a site marked with @1, at which a covalent bond with a site marked with @2 as contained in isocyanate-derived substructure B2 is present, the total number of substituents A and hence bonding sites @1 is t + z2.

The skilled reader understands that parameter z2 thus can also be regarded as indicating the number of branching sites within the siloxane substructure B1, which contributes to the number of branching sites in the siloxane copolymer compound as a whole. When z2 = 0, the resulting siloxane substructure B1 overall is linear, whereas the resulting siloxane substructure B1 overall is branched, when z2 ≥ 1.

In an exemplary siloxane substructure B1, R¹ is methyl, A has a structure A1 as shown above, z1 is 20 to 150, and z2 is 0. In another exemplary siloxane substructure B1, R¹ is methyl, A has a structure A2 as shown above, z1 is 30 to 40, and z2 is 0. In a further exemplary siloxane substructure B1, R¹ is methyl, A has a structure A1 as shown above, z1 is 20 to 80, and z2 is 2. In yet another exemplary siloxane substructure B1, R¹ is methyl, A has a structure A1 as shown above, z1 is 8 to 15, and z2 is 4.

### - Isocyanate-derived substructure B2

B2 has a structure that could be regarded as being derived from an isocyanate compound and is represented by formula U[-NH-C(=O)-@2]ₘ, wherein U is a substructure comprising 1 to 20 carbon atoms, wherein the nitrogen atom of each moiety -NH-C(=O)-@2 is covalently bonded to a carbon atom of U, m is 2 to 6, and @2 is a site of covalent bonding, namely to a site marked with @1, which is contained in the repeating units B1, B3 and B4.

In preferred embodiments, m is 2, 3, or 4. More preferably, m is 2. The skilled reader understands that that parameter m can be regarded as indicating the number of branching sites within the isocyanate-derived substructure B2, which hence contributes to the number of branching sites present in the siloxane copolymer compound as a whole. When m = 2, the resulting isocyanate-derived substructure B2 overall is linear, whereas the resulting isocyanate-derived substructure B2 overall is branched, when m > 2.

In general, the substructure represented by U is not particularly limited except for the number of carbon atoms present in the substructure. In preferred embodiments, U is a hydrocarbon, i.e. it does not contain atoms other than carbon and hydrogen.

In more preferred embodiments, U is aliphatic and, still more preferably has 4 to 16 carbon atoms, yet more preferably 4 to 13 carbon atoms, most preferably 6 to 10 carbon atoms. In other more preferred embodiments, U comprises aromatic substructures and has 6 to 16 carbon atoms, still more preferably 6 to 14 carbon atoms, yet more preferably 6 to 12 carbon atoms, most preferably 6 to 10 carbon atoms.

As exemplary substructures represented by U, the following can be mentioned, wherein the sites of the [-NH-C(=O)-@2] groups are indicated by the suffix "-yl" in accordance with common practice in nomenclature of organic compounds: tolylene 2,4-diyl, tolylene 2,6-diyl, a mixture of these isomers, diphenylmethane 4,4'-diyl, diphenylmethane 2,4'-diyl or diphenylmethane 2,2'-diyl, a mixture of these isomers, phenylene 1,3-diyl or phenylene 1,4-diyl, 2,3,5,6-tetramethylbenzene-1,4-diyl, naphthalene-1,5-diyl, 3,3'-dimethyl-diphenyl-4,4'-diyl, dianisidine diyl, tetramethylene 1,4-diyl, 2-methylpentamethylene 1,5-diyl, hexamethylene 1,6-diyl (HDI), 2,2,4-trimethylhexamethylene 1,6-diyl, 2,4,4-trimethylhexamethylene 1,6-diyl, a mixture of these isomers, decamethylene 1,10-diyl, dodecamethylene 1,12-diyl, cyclohexane 1,3-diyl, cyclohexane 1,4-diyl, 1-methyl-2,4-diisocyanatocyclohexane, 1-methyl-2,6-diisocyanatocyclohexane, a mixture of these isomers, 3,3,5-trimethyl-methylcyclohexane-1,5-diyl (isophorone diyl), perhydro(diphenylmethane) 2,4'-diyl, perhydro(diphenylmethane) 4,4'-diyl, 2,2,6-trimethylcyclohexane-1,4-diyl, cyclohexane-1,3-di(methylene), cyclohexane-1,4-di(methylene), m-xylylene diyl, p-xylylene diyl, m-tetramethylxylylene 1,3-diyl, m-tetramethylxylylene 1,4-diyl, p-tetramethylxylylene 1,3-diyl, p-tetramethylxylylene 1,4-diyl, bis(1-methylethyl-1-yl)naphthalene.

### - Alcohol-derived substructure B3

B3 has a structure that could be regarded as being derived from an alcohol compound and is represented by the formula R⁴[-O-@1]ₙ , in which n is 1 to 6 and R⁴ is a substructure comprising at least n carbon atoms, wherein the oxygen atom of each moiety -O-@1 is covalently bonded to a carbon atom of R⁴ and no carbon atom of R⁴ is covalently bonded to more than one moiety -O-@1, and @1 is a site of covalent bonding, namely to a site marked with @2, which is contained in the repeating units represented by B2.

In preferred embodiments, n has has a value in the range of 2 to 5, more preferably 2 to 4, still more preferably 2 or 3, most preferably 2.

While R⁴ generally has n carbon atoms, it is preferred that R⁴ contains 2 to 20 carbon atoms. R⁴ more preferably contains 2 to 12 carbon atoms, still more preferably 2 to 8 carbon atoms, yet more preferably 2 to 8 carbon atoms, most preferably 2, 3, or 4 carbon atoms. R⁴ can be aliphatic, aromatic or contains aliphatic and aromatic substructures. It is also preferred that R⁴ is a hydrocarbon consisting of carbon atoms and hydrogen atoms. When R⁴ contains aliphatic and aromatic substructures, it is preferred that R⁴ contains 6 to 20 carbon atoms.

In other preferred embodiments, B3 represents

@1-O-CH₂CH₂-O-@1,

@1-O-CH₂CH₂(CH₃)-O-@1,

@1-O-CH₂-CH(-O@1)-CH₂-O-@1,

@1-O-CH₂-CR₇(-CH₂-O@1)-CH₂-O-@1,

@1-O-CH₂-C(-CH₂-O@1)₂-CH₂-O-@1,

@1-O-CH₂-CH(-O-Y1)-CH₂-O-@1,

@1-O-CH₂-CH(-O@1)-CH₂-O-Y1,

@1-O-CH₂-CR₇(-CH₂-O@1)-CH₂-O-Y1,

or any combination of these,
wherein R⁷ represents methyl, ethyl, n-propyl or i-propyl, and Y1 represents -(EO)₁₀₋₃₀-CH₃, wherein -(EO)₁₀₋₃₀- represents a chain consisting of 10 to 30 ethyleneoxy units.

In alternative preferred embodiments, R⁴ represents a polyether substructure having a molecular weight of 5000 g/mol or less. In these embodiments, B3 can for instance represent a substructure @1-[-O-R³-]_{q}-O-@1, in which R⁸ each independently is a linear C2-C6 alkylene group or a branched C3-C6 alkylene group, and q has a value in the range of 2 to 50.

In other preferred embodiments, R⁴ represents a polyester substructure having a molecular weight of 5000 g/mol or less. In these embodiments, B3 can for instance represent a substructure @1-[-O-R⁹-O-C(=O)-R¹⁰-C(=O)-]ᵣ-O-@1, in which R⁹ each independently is a linear C2-C8 alkylene group, a branched C3-C6 alkylene group or a group having the hydrocarbon substructure of a diol obtainable from a dimerized fatty acid by reducing the carboxyl groups to hydroxyl groups, R¹⁰ each independently is a bond, a C1-C10 alkylene group, a C6-C10 arylene group, a combination of at least one C6-C10 arylene group and at least one C1-C4 aliphatic alkylene group, or a group having the hydrocarbon substructure of a dimerized fatty acid, and r has a value in the range of 2 to 50. More preferably, R¹⁰ each independently is a C1-C10 alkylene group, C4-C8 alkylene group or a C6 arylene group, and/or R⁹ each independently is a linear C4-C8 alkylene group or a branched C4-C6 alkylene group.

In other preferred embodiments, R⁴ represents a polycarbonate substructure having a molecular weight of 5000 g/mol or less. In these embodiments, B3 can for instance represent a substructure @1-[-O-R¹¹-O-C(=O)-]ₛ-O-@1, in which R¹¹ each independently is selected from a C2-C10 alkylene group or a C6-C10 arylene group and s has a value in the range of 2 to 50. More preferably, R¹¹ each independently is selected from a C4-C8 alkylene group and s has a value in the range of 10 to 30.

In other preferred embodiments, R⁴ represents a polycaprolactone diol substructure having a molecular weight of 5000 g/mol or less, i.e. diol substructures obtained from ring-opening oligomerization or polymerization of ε-caprolactone using a diol as initiator, which can be represented by the formula @1-[-O-(CH2)5-C(=O)]O-R^{diol}-O[(O=)C-(CH2)5-O-]_{pc}-@1, wherein pc is typically in a range of 1-24 and R^{diol} represents an aliphatic alkylene moiety having 2-6 carbon atoms. That is, the diol used as the initiator typically is aliphatic and has 2-6 carbon atoms, such as ethylene glycol diethylene glycol, 1,4-butanediol, neopentyl glycol, 1,6-hexanediol, for instance. Exemplary polycaprolactone diols are commercially available under the tradename "CAPA" from Ingevity Corporation (North Charleston, South Carolina, USA).

The skilled reader understands that B3 acts as a terminus of the siloxane copolymer compound, when B3 represents a structure that could be regarded as being derived from a monoalcohol, i.e. n = 1 such that the structure is R⁴-O-@1. Therefore, it is clear to the skilled reader that it is preferred to use B3 in which n = 1 in combination with other embodiments of B3 in which n > 2. Relative to the total amount of number of substructures B3, the embodiments of B3 in which n = 1 are preferably present in an amount of 10 % or less, more preferably 5 % or less.

### - Amine-derived substructure B4

B4 has a structure that could be regarded as being derived from an amine compound that can be a monoamine or a polyamine compound and can be represented by formula B4a or B4b,

| | |
|---|---|
| (B4a) | R⁶[-NR⁶-@1]ₚ |
| (B4b) | R⁶(@1-)N-[-CH₂-CH₂-NR⁶(-@1)-]ᵤ-CH₂-CH₂-NR⁶(-@1) |

In the structure represented by formula B4a, p is 1 to 6 and R⁵ is a substructure comprising at least p carbon atoms, wherein the nitrogen atom of each moiety -NR⁶-@1 is covalently bonded to a carbon atom of R⁵ and no carbon atom of R⁵ is covalently bonded to more than one moiety -NR⁶-@1. Each R⁶ independently is hydrogen or a group comprising at least 1 carbon atom and @1 is a site of covalent bonding, namely to a site marked with @2, which is contained in the repeating units represented by B2.

In preferred embodiments, p is 2 to 5, such as 2, 3, or 4, more preferably 2 or 3, most preferably 2.

It is likewise preferred that R⁵ has 2 to carbon atoms, more preferably 2 to 12 carbon atoms, still more preferably 2 to 8 carbon atoms, particularly preferably 2 to 6 carbon atoms, such as 2, 3 or 4 carbon atoms. Most preferably, R⁵ has 2 carbon atoms. R⁵ can be a hydrocarbon moiety exclusively consisting of carbon atoms and hydrogen atoms. R⁵ can be aliphatic or aromatic or can contain aromatic and aliphatic substructures. When R⁵ contains aromatic and aliphatic substructures, R⁵ preferably has 6 to 20 carbon atoms.

R⁶ preferably is -R¹²-G1, wherein R¹² represents a C2-C20 alkylene group and G1 represents an anionic group, a cationic group or a non-ionic group. In more preferred embodiments, R¹² represents a C2-C10 alkylene group, still more preferably a C2-C6 alkylene group.

G1 preferably represents a sulfonate group -SO₃⁻, an ammonium group -N(R¹³)₂, wherein each R¹³ independently represents a C1-C6 alkyl group or a group containing aliphatic and aromatic substructures and having 6 to 14 carbon atoms, or a group -(CH₂CH₂O)ₑ-CH₃, wherein e is 2 to 50. That is, G1 can for instance represent an ammonium group having -N⁺(CH₃)₂H or -N⁺(CH₂CH₃)₂H.

In alternative preferred embodiments, R⁶ represents hydrogen, a C1-C10 alkyl group, a C1-C6 alkyl group or a C1-C4 alkyl group, such as methyl, ethyl, n-propyl, i-propyl, n-butyl, i-butyl, sec-butyl, tert-butyl, of which methyl is preferred.

In the structure represented by formula B4b, u is 1 to 5 and each R⁶ is independently hydrogen or a group comprising at least 1 carbon atom. @1 is a site of covalent bonding, namely to a site marked with @2, which is contained in the repeating units represented by B2.

The moieties represented by R⁶ are the same as defined with respect to formula B4a, i.e. preferably R⁶ can represent is -R¹²-G1, hydrogen, a C1-C10 alkyl group, a C1-C6 alkyl group or a C1-C4 alkyl group as defined above, such as methyl, ethyl, n-propyl, i-propyl, n-butyl, i-butyl, sec-butyl, tert-butyl, of which methyl preferred.

In preferred embodiments, u is 0 to 4, such as 0, 1, 2, or 3, more preferably 0, 1 or 2, still more preferably 0 or 1, most preferably 0.

Thus, for instance, B4 can represent a substructure selected from

@1-HN-CH₂CH₂-NH-@1,

@1-HN-CH₂CH₂(CH₃)-NH-@1,

@1-HN-CH₂-CH(-NH@1)-CH₂-CH2-SO₃⁻ M ,

wherein M represents an alkali metal cation or an ammonium cation,

(@1-)NH-[-CH₂-CH₂-NH(-@1)-]ᵤ-CH₂-CH₂-NH(-@1),

wherein u is 1, 2, or 3.

### - Siloxane copolymer compound

The siloxane copolymer compound according to the first aspect of the present invention is suitable as a material having release properties and, hence, for forming a release liner comprising (i) a base having at least one surface and (ii) a layer of said material having release properties, i.e. the siloxane copolymer compound, on said at least one surface of the base. In particular, it was found that a layer of the siloxane copolymer compound has good release properties, i.e. an adhesive layer can be removed ("peeled") from a layer of the siloxane copolymer compound when a satisfactory force is applied. Additionally, it was found that a release liner comprising a layer of said siloxane copolymer compound can be recycled in a common papermaking process without interfering with the quality of the paper obtained from such a process and hence has recyclability. Namely, it was found that the amount of release liner fed into a common papermaking process in order to be recycled can be significantly higher than 30 % of the material to be recycled that is fed into the process without negatively affecting the properties of the recycled material obtained from said process. Furthermore, it was found that a layer of said siloxane copolymer compound (on a base as a constituent of a release liner, for instance) has low tackiness, i.e. a low tendency to adhere to non-adhesive surfaces such as surfaces of machinery used in the manufacture of release liners and adhesive articles comprising such a release liner as well as machinery used in a process of recycling such release liners.

Depending on the particulars of the respective application, the (a) release properties and (b) tackiness of a layer of said siloxane copolymer compound as well as (c) the recyclability of a release liner comprising said siloxane copolymer compound as the material having release properties, can be conveniently adjusted, namely by suitably selecting the chemical constitution of the repeating units represented by substructures B1, B2, B3 and B4 and/or by suitably selecting the amount of the repeating units represented by substructures B1, B2, B3 and B4 present in the siloxane copolymer compound relative to the total amount of repeating units. This will be explained in the following such that the skilled reader, on basis of his/her knowledge and expertise in the technical field of polymer formulations and applications, can conveniently put the present invention into practice.

It was surprisingly found that the release properties of a layer formed from the siloxane copolymer compound of the present invention on a base (such that a release liner is obtained) can be adapted by adjusting the the chain length of the siloxane structure B1 consisting of substructures B1a to B1c is suitable for controlling the tackiness and the recyclability of the release liner. More specifically, it was found that a siloxane copolymer compound comprising a siloxane-derived substructure B1 containing a higher number of siloxane units B1b gives a material having higher tackiness but lower recyclability, whereas a lower number of siloxane units B1b gives a material having lower tackiness but higher recyclability. Therefore, z1 preferably is 5 to 150, more preferably 10 to 150, still more preferably 20 to 150 and most preferably 25 to 150. Furthermore, it was found that siloxane copolymer compound having a higher content of branching siloxane units B1c in the siloxane-derived substructure B1 gives lower tackiness but also lower recyclability compared to a siloxane copolymer compound having a low number of branching units B1c. Therefore, z2 preferably is 0 to 4, more preferably 0 to 3, still more preferably 0 to 2, most preferably 0 or 1.

The siloxane copolymer according to the first aspect of the present invention contains substructures B1, B2 and at least one of B3 and B4 in relative amounts xB1, xB2, xB3, and xB4. In other words, xB1 is the number of the repeating units represented by B1 relative to the total number of repeating units represented by B1, B2, B3, and B4. In an analogous manner, xB2 is the number of the repeating units represented by B2 relative to the total number of repeating units represented by B1, B2, B3, and B4, xB3 is the number of the repeating units represented by B3 relative to the total number of repeating units represented by B1, B2, B3, and B4, and xB4 is the number of the repeating units represented by B4 relative to the total number of repeating units represented by B1, B2, B3, and B4. Thus, xB1, xB2, xB3, and xB4 could also be regarded as the molar fraction of the respective repeating units present in the siloxane copolymer compound. Since the repeating units represented by B4 can have a structure represented by formula B4a or formula B4b, the relative amount of repeating units B4, i.e. xB4, is the xB4a + xB4b, wherein xB4a is the number of the repeating units represented by B4a relative to the total number of repeating units represented by B1, B2, B3, and B4 and xB4b is the number of the repeating units represented by B4b relative to the total number of repeating units represented by B1, B2, B3, and B4.

B1 bears e2 * (2 + z2) covalent bonding sites @1, B2 bears m covalent bonding sites @2, B3 bears n covalent bonding sites @1, and B4 bears p covalent bonding sites @1 in the structure represented by formula B4a and (u + 2) covalent bonding sites @1 in the structure represented by formula B4b. In the siloxane copolymer compound, the relative number of covalent bonding sites @1 having its origin in substructure B1 can be calculated as (xB1 * e2 * (2 + z2)), the relative number of covalent bonding sites @2 having its origin in substructure B2 can be calculated as (xB2 * m), the relative number of covalent bonding sites @1 having its origin in substructure B3 can be calculated as (xB3 * n), and the relative number of covalent bonding sites @1 having its origin in substructure B4 can be calculated as (xB4a * p + xB4b * (u + 2)).

It was found that the content of siloxane units in the siloxane copolymer compound is a parameter suitable for adapting tackiness and the release force of a layer of said siloxane copolymer compound coated on a base (i.e. the release liner). In contrast, it was found that the recyclability of the release liner is not particularly affected by the content of siloxane units in the siloxane copolymer compound. Therefore, it is preferred that the relative number of siloxane-derived repeating units B1 and the number of covalent bonding sites @1 in said repeating units B1, the relative number of isocyanate-derived repeating units B2 and the number covalent bonding sites @2 in said repeating units B2, as well as the relative number of alcohol-derived repeating units B3 and the number of covalent bonding sites @1 in said repeating units B3, if repeating units B3 are present, is in the range of 1.00 : 1.25 to 1.00 : 3.00. More preferably, the amount of covalent bonding sites @1 present in the siloxane-derived substructure B1 and the alcohol-derived substructure B3 (if present) relative to the amount of covalent bonding sites @2 present in the isocyanate-derived substructure B2 is in the range of 1.00 : 1.50 to 1.00 : 2.70, still more preferably 1.00 : 1.70 to 1.00 : 2.40, particularly preferably 1.00 : 1.80 to 1.00 : 2.30.

This ratio can be attained by using reactants giving an appropriate number of covalent bonding sites in appropriate amounts in the method of preparing the siloxane copolymer compound, which represents the second aspect of the present invention. As mentioned, depending on the chemical structure of substructures B1 and B3, respectively, as described hereinabove, the number of covalent bonding sites @1 present in substructures B1 and B3 can be calculated as (xB1 * e2 * (2 + z2) + xB3 * n). Depending on the chemical structure of substructure B2 as described hereinabove, the number of covalent bonding sites @2 present in substructure B2 can be calculated as (xB2 * m). Thus, the ratio of the amount of covalent bonding sites @1 present in the siloxane-derived substructure B1 and the alcohol-derived substructure B3 (if present) relative to the amount of covalent bonding sites @2 present in the isocyanate-derived substructure B2 can be calculated as (xB1 * e2 * (2 + z2) + xB3 * n) / (xB2 * m).

A siloxane copolymer compound having a lower content of siloxane units typically has higher tackiness and leads to higher release force. Therefore, alcohol-derived substructure B3 can optionally be present in the siloxane copolymer compound. It is preferred that the substructure B3 is present in an amount such that the number of covalent bonding sites @1 in said substructure B3 (expressed as xB3 * n) relative to the total number of covalent bonding sites @1 in substructures B1 and B3 (expressed as (xB1 * e2 * (2 + z2) + xB3 * n) is 35 % or less. More preferably, (xB3 * n) / (xB1 * e2 * (2 + z2) + xB3 * n) is 30 % or less, still more preferably 25 % or less, particularly preferably 20 % or less.

Amine-derived substructure B4 is optionally present in the siloxane copolymer compound, in particular in order to provide additional covalent bonding sites @1, as the number of covalent bonding sites @1 provided by repeating units B1 and/or B3 typically is lower than the number of covalent bonding sites @2 (having their origin in substructure B2). The number of covalent bonding sites @2 not bonded to a repeating unit B1 or B3 can be calculated as xB2 * m - (xB1 * e2 * (2 + z2) + xB3 * n).

It is preferred that substructure B4 is present in an amount (expressed as xB4, which is xB4a + xB4b) such that the number of covalent bonding sites @1 in said substructure B4 (expressed as xB4a * p + xB4b * (u + 2)) is in the range of 0.4 to 1.0 relative to the number of covalent bonding sites @2 not bonded to a repeating unit B1 or B3. In other words, it is preferred that the ratio (xB4a * p + xB4b * (u + 2)) / (xB2 * m - (xB1 * e2 * (2 + z2) + xB3 * n)) is in the range of 0.40 to 1.00. More preferably, this ratio is in the range of 0.60 to 0.95, still more preferably 0.65 to 0.90.

The siloxane copolymer compound according to the first aspect of the present invention can be a linear molecule, i.e. the polymeric backbone of the siloxane copolymer compound is linear, or it can contain branching, i.e. the polymeric backbone of the siloxane copolymer compound is branched. Branching can be present in the polymeric backbone as a result of the presence of at least one repeating units containing more than 2 covalent bonding sites @1 or @2. The skilled reader understands that a linear polymeric backbone is present when the substructures B1, B2, B3 and B4 (to the extent present) are characterized in that in B1 z2 = 0, in B2 m = 2, in B3, n = 2, and B4 is represented by B4a in which p = 2. When B4 is represented by B4b, branching is present.

It was found that a siloxane copolymer compound having a high content of branched units in the polymer chain gives a coating having low tackiness but lower recyclability than a coating prepared from a siloxane copolymer compound having a low content of branched units in the polymer chain. In other words, a siloxane copolymer compound comprising units imparting a high amount of branching gives a coating having lower tackiness and lower recyclability. In order to adhere the siloxane copolymer compound to a base such as in a coating having release properties, it can hence be desirable to have some branching in the siloxane copolymer compound.

The amount of branching can be expressed as the percentage of branching %B. Within the framework of the present invention, the percentage of branching %B is calculated as %B = ((xB1 * e2 * (2 + z2) + xB2 * m + xB3 * n + xB4a * p + xB4b * (u + 2)) / (2 * (xB1 + xB2 + xB3 + xB4)) - 1) * 100

That is, the total amount of covalent bonding sites @1 and @2 present in the siloxane copolymer compound is calculated as
xB1 * e2 * (2 + z2) + xB2 * m + xB3 * n + xB4a * p + xB4b * (u + 2) and the theoretical amount of covalent bonding sites @1 and @2 present in the siloxane copolymer compound if each of B1, B2, B3, and B4 had 2 covalent bonding sites (such that a linear siloxane copolymer compound would be present) is calculated as 2 * (xB1 + xB2 + xB3 + xB4). The ratio of these terms minus 1 is expressed as percentage by multiplying with 100.

Typically, %B can be 20 % or less. Preferably, the %B is 10 % or less or 8 % or less, more preferably 6% or less, still more preferably 5, particularly preferably 4 % or less.

The siloxane copolymer compound according to the first aspect of the present invention can be provided in solid form such as in the form of a powder, pellets or beads, for instance, or in the form of a solution in a solvent, such as an organic solvent. Alternatively, the siloxane copolymer compound is provided in the form of a dispersion in water.

The siloxane copolymer compound can be prepared by means of the method according to the second aspect of the present invention, i.e. it is preferred that the siloxane copolymer compound is obtainable by the method according to the second aspect of the present invention.

### Second aspect:

According to the second aspect of the invention, there is provided a method of preparing a siloxane copolymer compound comprising the repeating units B1, B2 and at least one of B3 and B4, wherein each occurrence of B1, B2, B3, and B4 independently has the meaning defined in relation to the first aspect of the present invention, which method comprises the steps described in the following.

In a first reaction step, an isocyanate compound B2r of the general formula U[-NCO]ₘ is reacted with a siloxane compound B1r having a siloxane structure consisting of substructures B1ar, B1b and B1cr and, optionally, a polyol compound B3r of the general formula R⁴[-OH]ₙ.

In a second step of reacting the product obtained from the first step with a polyamine B4r of the general formula (B4ar) or (B4br).

The siloxane compound B1r having a siloxane structure consisting of substructures B1ar, B1b and B1cr is a reactant imparting substructures B1 into the siloxane copolymer compound according to the first aspect of the present invention. Therefore, substructures B1ar, B1b and B1cr represented by the following formulae

| | | |
|---|---|---|
| B1ar | [(R¹)₂(Ar)Si-] | of which t units are present, |
| B1b | [-(R¹)₂Si-] | of which z1 units are present, |
| B1cr | [-(R¹)(Ar)Si-] | of which z2 units are present, |

wherein each of t, z1, z2, and R¹ has the same meaning as described in relation to substructure B2 of the siloxane copolymer compound according to the first aspect of the invention. Ar as present in B1ar and B1cr is @Si-R²-O-CH₂-CH₂-O-[(EOₓ)/(AO)₁₋ₓ)]_{y}-H,
wherein @Si is a site of covalent bonding to the silicon atom of substructure B1a or B1c, and each of R², EO, AO, x, and y has the same meaning as described in relation to the siloxane copolymer compound according to the first aspect of the invention.

Since Ar contains a hydroxyl group present in terminal substructure B1a and optionally present central substructure B1c, siloxane compound B1r is also referred to as a silicone carbinol.

As exemplary siloxane compound B1r, the following compounds can be mentioned.
Si carbinol t = 2, z1 = 27, z2 = 0, R¹ = methyl, R² = -(CH₂)₃-, y = 1, x = 1;
Si carbinol t = 2, z1 = 75, z2 = 0, R¹ = methyl, R² = -(CH₂)₃-, y = 1, x = 1;
Si carbinol t = 2, z1 = 150, z2 = 0, R¹ = methyl, R² = -(CH₂)₃-, y = 1, x = 1;
Si carbinol t = 2, z1 = 38, z2 = 0, R¹ = methyl, R² = -(CH₂)₃-, y = 11, x = 1;
Si carbinol t = 2, z1 = 78, z2 = 2, R¹ = methyl, R² = -(CH₂)₃-, y = 1, x = 1;
Si carbinol t = 2, z1 = 26, z2 = 2, R¹ = methyl, R² = -(CH₂)₃-, y = 1, x = 1;
Si carbinol t = 2, z1 = 10, z2 = 4, R¹ = methyl, R² = -(CH₂)₃-, y = 1, x = 1.

The isocyanate compound B2r of the general formula U[-NCO]ₘ is a reactant imparting substructure B2 into the siloxane copolymer compound according to the first aspect of the present invention. Therefore, parameters U and m of the general formula have the same meaning as described in relation to substructure B2 of the siloxane copolymer compound according to the first aspect of the invention.

Isocyanate compound B2r can for instance be selected from tolylene 2,4-diisocyanate, tolylene 2,6-diisocyanate, a mixture of these isomers (TDI), diphenylmethane 4,4'-diisocyanate, diphenylmethane 2,4'-diisocyanate or diphenylmethane 2,2'-diisocyanate, a mixture of these isomers (MDI), phenylene 1,3-diisocyanate or phenylene 1,4-diisocyanate, 2,3,5,6-tetramethyl-1,4-diisocyanatobenzene, naphthalene 1,5-diisocyanate (NDI), 3,3'-dimethyl-4,4'-diisocyanatodiphenyl (TODI), dianisidine diisocyanate (DADI), tetramethylene 1,4-diisocyanate, 2-methylpentamethylene 1,5-diisocyanate, hexamethylene 1,6-diisocyanate (HDI), 2,2,4-trimethylhexamethylene 1,6-diisocyanate, 2,4,4-trimethylhexamethylene 1,6-diisocyanate, a mixture of these isomers (TMDI), decamethylene 1,10-diisocyanate, dodecamethylene 1,12-diisocyanate, cyclohexane 1,3-diisocyanate, cyclohexane 1,4-diisocyanate, 1-methyl-2,4-diisocyanatocyclohexane, 1-methyl-2,6-diisocyanatocyclohexane, a mixture of these isomers (HTDI or H6TDI), 1-isocyanato-3,3,5-trimethyl-5-isocyanatomethylcyclohexane (isophorone diisocyanate or IPDI), perhydro(diphenylmethane) 2,4'-diisocyanate, perhydro(diphenylmethane) 4,4'-diisocyanate (HMDI or H12MDI), 1,4-diisocyanato-2,2,6-trimethylcyclohexane (TMCDI), 1,3-bis(isocyanatomethyl)cyclohexane, 1,4-bis(isocyanatomethyl)cyclohexane, m-xylylene diisocyanate (m-XDI), p-xylylene diisocyanate (p-XDI), m-tetramethylxylylene 1,3-diisocyanate, m-tetramethylxylylene 1,4-diisocyanate, (m-TMXDI), p-tetramethylxylylene 1,3-diisocyanate, p-tetramethylxylylene 1,4-diisocyanate (p-TMXDI), bis(1-isocyanato-1-methylethyl)naphthalene and mixtures thereof.

The polyol compound B3r of the general formula R⁴[-OH]ₙ is a reactant imparting substructures B3 into the siloxane copolymer compound according to the first aspect of the present invention. Therefore, R⁴ and n of the general formula have the same meaning as described in relation to substructure B3 of the siloxane copolymer compound according to the first aspect of the invention.

Polyol compound B3r can for instance be selected from 1,2-ethylene glycol, 1,2-propylene glycol, glycerine, trimethylol ethane, trimethylol propane, trimethylol butane, pentaerythritol, mono-methylethoxylated glycerine, mono-methylethoxylated trimethylol ethane, mono-methylethoxylated trimethylol propane, and mono-methylethoxylated trimethylol butane, wherein the term "mono-methylethoxylated" preferably refers to a moiety H₃C-(EO)₁₀₋₃₀-, i.e. a chain consisting of 10 to 30 ethyleneoxy units bearing a terminal methyl group (to which it is commonly referred to as "methyl-capped" ethyleneoxy chain). Such mono-methylethoxylated compounds are commercially available under the tradename "Ymer" from Perstorp Holding AB, Sweden.

Compound B3r in which n = 1, i.e. a mono alcohol, can be used. However, the skilled reader understands that such a compound represents a terminus of the siloxane copolymer compound. A compound B3r, in which n = 1, can hence be used in order to control the chain length of the siloxane copolymer compound. The skilled reader is aware that a mono alcohol should be used as compound B3r in a mixture with higher alcohols only, i.e. alcohols in which n > 1, in order to prevent that the siloxane copolymer compound obtained has a very low molecular weight. More specifically, it is preferred that the molar amount of alcohol compounds with n = 1 in such a mixture of alcohol compounds is 10 % or less, more preferably 5 % or less.

The polyamine B4r of the general formula (B4ar) or (B4br) is a reactant imparting substructures B4, more specifically B4a and/or B4b into the siloxane copolymer compound according to the first aspect of the present invention. Therefore, parameters R⁵, R⁶, and p of the general formula representing B4ar and parameters R⁶ and u of the general formula representing B4br have the same meaning as described in relation to substructure B4, B4a, and B4b, respectively, of the siloxane copolymer compound according to the first aspect of the invention.

Polyamine compounds B4ar can for instance be selected from ethylene diamine (1,2-diamino ethane), 1,2-diamino propane, 1,3-diamino propane, 1,4-diamino butane, 1,2-diamino cyclohexane, 1,4-diamino cyclohexane, 1,2-diamino benzene, 1,3-diamino benzene, 1,4-diamino benzene, 1,2-diamino xylene, 1,3-diamino xylene, 1,4-diamino xylene.

Polyamine compounds B4ar can for instance be selected from diethylene triamine, triethylene tetramine and tetraethylene diamine.

Compounds B4ar and/or B4br can contain an anionic group, a cationic group or a non-ionic group. Preferably, the non-ionic group comprises ethyleneoxy moieties, the anionic group is a sulfonate group, and the cationic group is an ammonium group, such as a dialkyl ammonium group. It also possible to form the cationic group after the second reaction step, for instance by protonating or alkylation a dialkylamino group. The presence of such a anionic group, a cationic group or a non-ionic group in compound B4ar and/or B4br can be advantageous when the siloxane copolymer compound is to be provided in the form of a dispersion, such as a dispersion in water, because the anionic group, cationic group and/or non-ionic group facilitates dispersing the siloxane copolymer compound and increases the stability of the dispersion, i.e. phase separation is prevented.

Compound B4ar in which p = 1, i.e. a mono amine, can be used. However, the skilled reader understands that such a compound represents a terminus of the siloxane copolymer compound. A compound B4ar, in which p = 1, can hence be used in order to control the chain length of the siloxane copolymer compound. The skilled reader is aware that a mono amine should be used as compound B4ar in a mixture with higher amine compounds only, i.e. compounds B4ar in which p > 1 and/or in combination with a compound B4br, in order to prevent that the siloxane copolymer compound obtained has a very low molecular weight.

More specifically, it is preferred that the molar amount of amine compounds B4ar with p = 1 in such a mixture of amine compounds is 10 % or less, more preferably 5 % or less.

The reaction is preferably conducted in a solvent, i.e. a solvent that is present in the first reaction step and the second reaction step. The solvent preferably has a boiling point in the range of 40 °C to 80 °C at a pressure of 1013 mbar, more preferably in the range of 45 °C to 70 °C, still more preferably in the range of 50 °C to 60 °C. The solvent can for instance be selected from acetone, butanone, tetrahydrofuran, dioxane or a combination of these, wherein acetone is preferred.

In preferred embodiments, the reaction steps are carried out at elevated temperature, i.e. at a temperature in the range of 20 °C to the boiling point of the solvent. More preferably, the reaction steps are carried out at a temperature in the range of 40 °C to the boiling point of the solvent.

The reaction steps can be promoted by using a catalyst. Suitable catalysts are known to the skilled reader as compounds that accelerate the reaction between isocyanates and polyols (also referred to as the urethane reaction), preferably without promoting side-reactions such as the water-isocyanate reaction and/or the hydrolysis of esters. Such catalysts can be selected from organic acids, organic bases, in particular organic amines, organometallic compounds such as organo-tin compounds, tin carboxylates, bismuth carboxylates, zinc carboxylates, zirconium carboxylates, and nickel carboxylates. Of these, bismuth carboxylates such as 2-ethylhexanoates or neodecanoates are preferred.

As mentioned, the amounts of reactants used in the reaction steps can be selected within broad ranges in order to adapt the properties of the siloxane copolymer compound as needed and in accordance with the description hereinabove concerning the siloxane copolymer compound of the first aspect of the invention. Thus, it is preferred that the relative molar amount of compound B1r and the number of hydroxyl groups in said compound B1r, the relative molar amount of compound B2r and the number of isocyanate groups in said compound B2r, as well as the relative molar amount of compound B3r and the number of hydroxyl groups in said compound B3r, if this compound is used (i.e. repeating units B3 are present in the siloxane copolymer compound), is in the range of 1.00 : 1.25 to 1.00 : 3.00. More preferably, the molar amount of hydroxyl groups present in compound B1r and in the compound B3r (if present) relative to the molar amount of isocyanate groups present in the compound B2r is in the range of 1.00 : 1.50 to 1.00 : 2.70, still more preferably 1.00 : 1.70 to 1.00 : 2.40, particularly preferably 1.00 : 1.80 to 1.00 : 2.30.

This ratio can be attained by using compounds having an appropriate number of functional groups in appropriate amounts. The molar amount of hydroxyl groups present in compounds B1 r and B3r can be calculated as (xB1r * e2 * (2 + z2) + xB3r * n). The molar amount of isocyanate groups present in compound B2r can be calculated as (xB2r * m). Thus, the ratio of the molar amount of hydroxyl groups present in B1r and B3r (if present) relative to the molar amount of isocyanate groups present in B2r can be calculated as$\left(xB1r * e2 *\left(2 + z2\right)+ xB3r * n\right) / \left(xB2r * m\right) .$

Hereinabove, it was mentioned that it can be desirable that substructure B3 is present in the siloxane copolymer compound. To this end, it is preferred that the compound B3r is present in the reaction mixture in an amount such that the molar amount of hydroxyl groups in said compound B3r (calculated as xB3 * n) relative to the total number of hydroxyl groups in compounds B1 r and B3r (calculated as (xB1r * e2 * (2 + z2) + xB3r * n) is 35 % or less. More preferably, (xB3r * n) / (xB1r * e2 * (2 + z2) + xB3r * n) is 30 % or less, still more preferably 25 % or less, particularly preferably 20 % or less.

Amine compound B4r is present in the reaction mixture in the second reaction step and the amine groups react with isocyanate groups of compound B2r remaining after the first reaction step, as the number of hydroxyl groups provided by compounds B1r and B3r typically is lower than the number of isocyanate groups provided in the reaction mixture by compound B2r. The molar amount of isocyanate groups not bonded to a compound B1r or B3r can be calculated as xB2r * m - (xB1r * e2 * (2 + z2) + xB3r * n).

It is preferred that compound B4r is present in an amount (expressed as xB4r, which is xB4ar + xB4br) such that the amount of isocyanate groups provided in the reaction mixture by compound B4r (expressed as xB4ar * p + xB4br * (u + 2)) is in the range of 0.8 to 2.3 relative to the amount of unreacted hydroxyl groups of compounds B1r or B3r. In other words, it is preferred that the ratio
(xB4ar * p + xB4br * (u + 2)) / (xB2r * m - (xB1r * e2 * (2 + z2) + xB3r * n)) is in the range of 0.80 to 2.30. More preferably, this ratio is in the range of 0.90 to 1.60, still more preferably 1.00 to 1.40.

As mentioned, the siloxane copolymer compound according to the first aspect of the present invention can be a linear molecule, i.e. the polymeric backbone of the siloxane copolymer compound is linear, or it can contain branching, i.e. the polymeric backbone of the siloxane copolymer compound is branched. Branching in the polymeric backbone is achieved by providing in the reaction mixture at least one compound B1r, B2r, B3r and B4r containing more than 2 functional groups, i.e. hydroxyl groups, isocyanate groups or amine groups, respectively. The skilled reader understands that a linear polymeric backbone is prepared when the compounds B1r, B2r, B3r and B4r (to the extent present) are characterized in that in B1r z2 = 0, in B2r m = 2, in B3r n = 2, and B4r is represented by B4a in which p = 2. When B4r is represented by B4br, branching is present.

The amount of branching can be expressed as the percentage of branching %B. Within the framework of the present invention, the percentage of branching %B is calculated from the relative molar amounts of the reactant compounds B1r, B2r, B3r, and B4r present in the reaction mixture and the number of functional groups present in each of these compounds as %B = ((xB1r * e2 * (2 + z2) + xB2r * m + xB3r * n + xB4ar * p + xB4br * (u + 2)) / (2 * (xB1r + xB2r + xB3r + xB4r)) - 1) * 100

That is, the total amount of reactive functional groups (i.e. hydroxyl groups, isocyanate groups and amine groups) present in the reaction mixture is calculated as
xB1r * e2 * (2 + z2) + xB2r * m + xB3r * n + xB4ar * p + xB4br * (u + 2) and the theoretical amount of reactive functional groups present in the reaction mixture if each of B1, B2, B3, and B4 had 2 reactive functional groups (such that a linear siloxane copolymer compound would result) is calculated as 2 * (xB1r + xB2r + xB3r + xB4r). The ratio of these terms minus 1 is expressed as percentage by multiplying with 100.

Typically, %B can be 20 % or less. Preferably, the %B is 10 % or less or 8 % or less, more preferably 6% or less, still more preferably 5, particularly preferably 4 % or less.

### Third aspect:

According to the third aspect of the invention, there is provided an aqueous dispersion comprising (a) the siloxane copolymer compound as defined in any one of embodiments [1.1] to [1.118] and (b) water.

The content of the siloxane copolymer compound in the aqueous dispersion, i.e. the weight of the siloxane copolymer compound present in the aqueous dispersion relative to the total weight of the aqueous dispersion, is not particularly limited. However, from the viewpoint of sustainability, it is desirable that the content of the siloxane copolymer compound in the aqueous dispersion is as high as possible. Aspects such as a reduced stability of the aqueous dispersion can limit the content of the siloxane copolymer compound, however. That is, depending on the specific chemical constitution of the siloxane copolymer compound, the composition of the specific aqueous dispersion such as the presence or absence of agents having a positive impact on the dispersibility of the siloxane copolymer compound, the particle size of the dispersed siloxane copolymer compound etc., the content of the siloxane copolymer compound in the aqueous dispersion may be limited to a maximum value. Therefore, it is preferred that the content of the siloxane copolymer compound in the aqueous dispersion is 20-70 wt.-%, more preferably 30-65 wt.-%, still more preferably 40-60 wt.-%.

In order to promote the dispersibility of the siloxane copolymer compound and/or in order to stabilize the aqueous dispersion, the aqueous dispersion can contain an auxiliary agent. Said auxiliary agent can be an organic solvent that is miscible with water such as methanol, ethanol, n-propanol, i-propanol, acetone, butanone, tetrahydrofuran, dioxane or a combination of these. Within the framework of the present invention, miscibility of an organic solvent means that more than 200 g of the organic solvent can be mixed with 1 liter of water at 20 °C such that a single phase is formed, i.e. no formation of separate layers of water and organic solvent is discernible with the naked human eye after the mixture was allowed to stand for 2 hours.

Independently, the aqueous dispersion can contain an adjuvant, which can be present in addition or as an alternative to the aforementioned auxiliary agent. For instance, the aqueous dispersion can contain a foam suppressing agent such as a siloxane compound, more specifically a polydimethylsiloxane compound. When present, the adjuvant is present in an amount of 0.5 wt.-% or less relative to the total weight of the components of the aqueous dispersion. More preferably, the adjuvant is present in an amount of 0.1 wt.-%, still more preferably 0.05 wt.-%, relative to the total weight of the components of the aqueous dispersion.

Preferably, the siloxane copolymer compound and water represent the major components of the aqueous dispersion. For instance, the weight of the siloxane copolymer compound and water can be 90 wt.-% or more of the total weight of the aqueous dispersion. In preferred embodiments, the weight of the siloxane copolymer compound and water can be 95 wt.-% or more of the total weight of the aqueous dispersion, more preferably 97 wt.-%, still more preferably 99 wt.-%.

The aqueous dispersion according to the third aspect of the present invention is obtainable by the method according to the fourth aspect of the invention as described in the following.

### Fourth aspect:

According to the fourth aspect of the invention, there is provided a method of preparing the aqueous dispersion according to the third aspect of the present invention, i.e. as defined in embodiments [3.1] to [3.19], which method comprises the steps of (a) preparing a mixture of (i) a solution of a siloxane copolymer compound, which siloxane copolymer compound is as defined in any one of embodiments [1.1] to [1.118] in an organic solvent, which organic solvent is miscible with water, (ii) optionally an adjuvant, and (iii) water, and (b) removing at least a part of the organic solvent from the mixture prepared in step (a).

As mentioned, within the framework of the present invention, an organic solvent is regarded as being miscible with water, if more than 200 g of the organic solvent can be mixed with 1 liter of water at 20 °C such that a single phase is formed, i.e. no formation of separate layers of water and organic solvent is discernible with the naked human eye after the mixture was allowed to stand for 2 hours.

Step (b) can be carried out by evaporating the organic solvent from the mixture obtained in step (a). In order to facilitate removal of the organic solvent by evaporation of the organic solvent without simultaneous evaporation of large amount of water, it is preferable that the organic solvent has a boiling point in the range of 40 °C to 80 °C at a pressure of 1013 mbar. For instance, the organic solvent is selected from methanol, ethanol, n-propanol, i-propanol, acetone, butanone, tetrahydrofuran, dioxane or a combination of these.

From the viewpoint of sustainability and efficiency, in step (a) of the method, it should be avoided to use an excessive amount of organic solvent and/or water. Thus, preferably, the content of the siloxane copolymer compound in the solution is in the range of 30-80 wt.-%, relative to the total weight of the solution used in step (a) of the method. More preferably, the content of the siloxane copolymer compound in the solution is in the range of 40-70 wt.-%, still more preferably in the range of 45-65 wt.-%. Likewise, it is preferable that the amount of water in step (a) is in the range of 50-100 wt.-% relative to the total weight of the solution of the siloxane copolymer compound in an organic solvent used in step (a). More preferably, an amount of water in the range of 60-90 wt.-%, still more preferably 65-85 wt.-%, relative to the total weight of said solution is used in step (a).

The adjuvant that can be present in the mixture prepared in step (a) is typically present in an amount of 0.5 wt.-% or less relative to the total weight of the components of the dispersion obtained from step (b) of the method. More preferably, the adjuvant is present in an amount of 0.1 wt.-% or less, still more preferably in an amount of 0.05 wt.-% or less, relative to the total weight of the components of the dispersion obtained from step (b) of the method.

The adjuvant can for instance comprise a foam suppressing agent, which can be advantageous in order to avoid the excessive formation of foam in step (b) when the organic solvent is removed from the mixture obtained in step (a) by evaporation, in particular when elevated temperature and and/or reduced pressure is applied. The foam suppressing agent can be a siloxane compound such as a polydimethylsiloxane compound.

In step (b), preferably at least 70 wt.-% of the organic solvent present in the solution employed in step (a) is removed. More preferably, at least 80 wt.-%, still more preferably at least 90 wt.-%, particularly preferably at least 95 wt.-% of the organic solvent present in the solution is removed.

As mentioned, step (b) can be carried out by evaporating the organic solvent from the mixture obtained in step (a). It is clear to the skilled reader that the organic solvent evaporated from the mixture should be recovered by means of subsequent condensation of the organic solvent from the vapor. Evaporation can be facilitated by exposing the mixture of step (a) to a reduced pressure, pressure below 1013 mbar. Likewise, subsequent condensation of the evaporated solvent can then be facilitated leading the vapor by exposing the vapor to normal pressure, i.e. 1013 mbar. In some embodiments, it can be helpful to expose the vapor to elevated pressure, i.e. pressure of more than 1013 mbar. For instance, preferably the organic solvent is removed in step (b) at a pressure of 800 mbar or less, more preferably 600 mbar or less. Likewise, it is preferred to remove the solvent at elevated temperature such as at a temperature of 30 °C or higher. More preferably, the solvent is removed at a temperature of 40 °C or higher. It can be particularly preferable to combine exposing the mixture of step (a) to a reduced pressure, pressure below 1013 mbar (such as 800 mbar or less or 600 mbar or less), and elevated temperature such as at a temperature of 30 °C or higher or 40 °C or higher. More specifically, combining the exposure of the mixture of step (a) to a pressure of 600 mbar or less and a temperature of 40 °C or higher can be contemplated.

The skilled reader recognizes that the solution (i) of a siloxane copolymer compound employed in step (a) can be the product of the method of preparing a siloxane copolymer compound described herein as the second aspect of the present invention. In other words, in particular from the viewpoint of sustainability and efficiency, it is preferred that the solvent used in the method of preparing a siloxane copolymer compound described herein as the second aspect of the present invention is not removed prior to step (a) of the method of preparing an aqueous dispersion according to the fourth aspect of the present invention.

### Fifth aspect:

According to the fifth aspect of the invention, there is provided a release liner comprising a base and a layer of the siloxane copolymer compound as defined in any one of embodiments [1.1] to [1.118] on a surface of said base.

Said base is not particularly limited as regards its shape and the material which it contains. Thus, the material of the base can for instance be a metallic material (such as iron, copper, aluminum, zinc, nickel, silver, gold, alloys of these steel, bronze, brass, etc.), a ceramic material , natural rock, artificial rock such as a hydraulic cement, for instance concrete, gypsum, brick, fired clay, a synthetic polymeric material, or a natural polymeric material. Preferably, the material of the base is a synthetic polymeric material such as a polyolefin, a polyester, a polyamide, polyvinylchloride or any combination of these, or a natural polymeric material such as a cellulose material, for instance paper or cardboard. It is also possible that the material of the base is a combination of a cellulose material and a synthetic polymer such as a combination of cellulose fibers and fibers of a synthetic polymer. It is particularly preferred that the material of the base is a natural polymeric material such as a cellulose material, for instance paper or cardboard, which can optionally contain fillers and other auxiliary agents in an amount of up to 30 wt.-%. When the base is paper, it can have an area weight in a wide range, preferably in the range of 50-150 g/m², more preferably in the range of 70-130 g/m², still more preferably in the range of 80-120 g/m².

Generally, the material can be in the shape of a film such as a film obtained by blowing, casting, calandering, etc.. When the material of the base is a natural polymeric material such as a cellulose material, for instance paper or cardboard, the shape typically is a sheet. The skilled reader acknowledges that a film as well as a sheet is a flat object having an upper surface and a lower surface.

When the base is in the shape of a film or sheet and hence has an upper surface and a lower surface, the layer of the siloxane copolymer compound of the release liner is present on the upper surface, on the lower surface or on both the upper and the lower surface. When the siloxane copolymer compound is present on the upper surface of the base, the lower surface can be attached to another material.

The layer of the siloxane copolymer compound can have a thickness in a wide range, preferably in the range of 1-30 µm, more preferably 1-20 µm. In addition or as an alternative, the layer of the siloxane copolymer compound can be described by means of the coating weight, i.e. the amount by weight of the siloxane copolymer compound applied as the layer. Preferably, the layer of the siloxane copolymer compound has a coating weight in the range of 1 to 10 g/m², more preferably 2-5 g/m².

The release liner according to the fifth aspect of the present invention is obtainable by the method according to the sixth aspect of the invention as described in the following.

When the release liner is adhered to a layer of an adhesive that is present on a surface of an article, the release liner can be conveniently peeled from the adhesive layer. More specifically, when the force required for peeling the adhesive layer from the siloxane copolymer compound layer of the release liner, i.e. the release force, is determined at a speed of 300 mm per minute and at an angle of peel of 180° (according to Finat Test Method 10 ("FTM 10"), issued by the "Féderation Internationale des Fabricants et Transformateurs d'Adhésifs et Thermocollants sur Papiers et autres Supports"), a release force of 5 N/inch or less is typically observed. Preferably, the release force is 3 N/inch or less, more preferably 1.5 N/inch or less, most preferably 0.5 N/inch or less.

### Sixth aspect:

According to the sixth aspect of the invention, there is provided a method of preparing the release liner according to the fifth aspect of the present invention, i.e. as defined in embodiments [5.1] to [5.10] and as described above. The method comprises the steps of (a) applying an aqueous dispersion as defined in any one of embodiments [3.1] to [3.19] to a surface of a base, and (b) allowing the water and any organic solvent, which can be optionally present, to evaporate from said dispersion.

Regarding the nature of the base, it is referred to the corresponding description relating to the fifth aspect of the invention.

It is preferred that the the amount of the aqueous dispersion applied to said surface of the base is such that the dry coating amount (also referred to as dry coating weight) is in the range of 1-10 g/m². More preferably, the dry coating amount is in the range of 2-5 g/m². The skilled reader understands that the amount of the aqueous dispersion to be applied in order to achieve a specific dry coating weight can be calculated on basis of the amount by weight of the siloxane copolymer compound present in the aqueous dispersion.

Step (a) can be carried out by any known coating method suitable for applying an aqueous dispersion in the amount required in order to achieve the desired dry coating amount.

Step (b) can be carried out by any known method suitable for attaining the evaporation of water an, optionally, any organic solvent that may be present in the aqueous dispersion. For instance, the base coated with the aqueous dispersion can be exposed to elevated temperature for a sufficient period of time, preferably in the range of 70-130 °C, more preferably 80-120 °C. The period of time during which the base coated with the aqueous dispersion is exposed to elevated temperature can be suitably selected and preferably is in the range of 1-5 minutes, more preferably 1-4 minutes, still more preferably 2-3 minutes.

### Seventh aspect:

According to the seventh aspect of the invention, there is provided an adhesive article, which comprises in the following order (i) an article having a surface, (ii) a layer of an adhesive on the surface of said article, which layer has a thickness in the range of 5-500 µm, (iii) a layer of a siloxane copolymer compound as defined in any one of embodiments [1.1] to [1.118], which layer has a thickness in the range of 1-30 µm, and (iv) a base.

The article (i) can be any article having a surface and is not particularly limited. For instance, the article comprise or consists of a metallic material (such as iron, copper, aluminum, zinc, nickel, silver, gold, alloys of these steel, bronze, brass, etc.), a ceramic material, natural rock, artificial rock such as a hydraulic cement, for instance concrete, gypsum, brick, fired clay, a synthetic polymeric material, or a natural polymeric material. Preferably, the material of the base is a synthetic polymeric material such as a polyolefin, a polyester, a polyamide, polyvinylchloride or any combination of these, or a natural polymeric material such as a cellulose material, for instance paper or cardboard.

The shape of the article (i) is not limited and can be any three-dimensional geometric shape typical for the respective material of the article. For instance, the article (i) can be a plate, a slab, a film, a sheet, a board, a panel or any other kind of article having a three-dimensional shape. In essence, the article should have a surface, on which a layer of an adhesive can be applied as a coating. The article can in particular be a label, printed, written or blank, but is not limited to this. Thus, the article can likewise be a tape, which could be regarded as being a label having a very high length relative to its width, and can be supplied in coiled form such as on a roll, spool or bobbin, from which it can be rolled for use. The article can likewise be a pad, a sticker, or an article having a complex three-dimensional shape such as a pre-formed part used as a component of a car body, a component of an architectural structure such as a building, or an element of machinery housing.

The adhesive present on the surface of said article as a layer (ii) can typically be a pressure-sensitive adhesive, which is known the skilled reader as a type of non-reactive adhesive which forms a bond when pressure is applied to bond the adhesive with a surface, i.e. no solvent, water, or heat is needed to activate the adhesive. As the name "pressure-sensitive" indicates, the degree of bond can be influenced by the amount of pressure which is used to apply the adhesive to the surface. From a chemical point of view, the adhesive can be based on an elastomer, optionally compounded with a suitable tackifier. The elastomer can be a polymer of acrylic acid, methacrylic acid, acrylic acid esters, methacrylic acid esters such as butyl acrylate or methyl methacrylate. The elastomer can likewise be a styrene copolymer such as a styrenebutadiene-styrene copolymer (SBS), in particular a block copolymer, a styrene-ethylene/butylene-styrene copolymer (SEBS), in particular a block copolymer, a styrene-ethylene-propylene (SEP), in particular a block copolymer, or a styrene-isoprene-styrene copolymer (SIS), in particular a block copolymer.

The layer (iii) and the base (iv) in essence represent the release liner according to the fifth aspect of the invention. Therefore, regarding the nature of said layer (iii), the nature of the base (iv), and any preferred embodiments, it is referred to the corresponding description relating to the fifth aspect of the invention.

Regarding the nature of the siloxane copolymer compound present in layer (iii), it is referred to the description of the first aspects of the invention.

### Examples

In the following, the present invention is illustrated by means of the following examples and comparative examples.

### General observations

In the examples and comparative examples, the following materials and analytical methods are used.

### (1) Measurement of Release force

The release force is measured according to Finat Test Method 10 ("FTM 10"), issued by the "Féderation Internationale des Fabricants et Transformateurs d'Adhésifs et Thermocollants sur Papiers et autres Supports".

The release force is determined by measuring the force required for releasing an adhesive material from a coated base (i.e. the release liner) at a speed of 300 mm per minute and at an angle of peel of 180°.

### (2) Evaluation of tackiness of the coated paper

A sample having the dimensions 297 mm x 210 mm is cut from the coated paper base and placed on the surface of a lab bench with the coated surface facing upwards. The coated surface of the sample is touched with the tip of the thumb and tackiness is rated according to the following three categories.

| | |
|---|---|
| - Rating 3: | Paper adheres to the skin of the thumb for more than 3 seconds under the impact of gravity when it is attempted to lift the thumb from the coated paper, i.e. coated paper is tacky. |
| - Rating 2: | Paper adheres to the skin of the thumb for 1 to 3 seconds under the impact of gravity when it is attempted to lift the thumb from the coated paper but is then released under the impact of gravity, i.e. coated paper is slightly tacky. |
| - Rating 1: | Paper does not adhere to the skin of the thumb or paper adheres to the skin of the thumb for less than 1 second under the impact of gravity when it is attempted to lift the thumb from the coated paper but is then released under the impact of gravity, i.e. coated paper is not tacky. |

### (3) Coating method

The paper bases are coated using a film applicator (Automatic Film Applicator AG-2150, commercially available from BYK-Gardner, Geretsried, Germany) with variable spiral bars (bar distance can be set from 0 to 24 µm). Standard conditions for drying are 2 minutes at 120 °C.

### (4) Qualitative Recyclability Test

The recyclability has been evaluated according to an industry test method without fractionation as described in the following.

The paper base (Glassine paper, 90 g/m²) has been coated with ca. 2 g/m² dry coating amount of the respective formulation and subsequently dried at 120 °C for 2 min (see also section "Lab coating process"). The coated papers are then disintegrated according to DIN ISO 5263 (1.5 % stock consistency, 20 min disintegration, 3.000 rpm). Lab hand sheets are formed according to DIN EN ISO 5269-2.

The recyclability is qualitatively evaluated by considering two aspects:
- Homogeneity of the lab sheet (cloudiness), which is rated as follows.
   Extremely cloudy: visible fiber aggregations greater than 2x2 cm
   Cloudy: visible fiber aggregations < 2x2 cm
   Not cloudy: no visible fiber aggregations
- Tackiness of the lab sheet (adherence to the black cover sheet)
   If the lab sheet contains sticky residues (tacky surface), white fiber particles are transferred to the black cover sheet. If the black cover sheets contains visible fiber residues that have been pulled off the lab sheet (after drying), the sheet is labelled as tacky. Extremely tacky is classified in case of more than 10 visible fiber spots on the black cover sheet.

Recyclability is rated according to the following four categories.

| | |
|---|---|
| - Rating 4: | Lab sheet formation is extremely cloudy and the sheet is extremely tacky. |
| - Rating 3: | Lab sheet formation is cloudy and the sheet is tacky. |
| - Rating 2: | Lab sheet formation is cloudy or the sheet is tacky. |
| - Rating 1: | Lab sheet formation is not cloudy and the sheet is not tacky. |

### (5) Hydroxyl number (OHN)

The hydroxyl number was determined according to the following procedure.

Ideally, the amount of sample to be used is estimated on basis of the estimated hydroxyl number of the sample using the following equation.

### Amount of sample [g] = 40 / (estimated hydroxyl number of the sample [mg KOH / g])

The sample is weighed into a 50 ml Erlenmeyer flask. 3 ml of toluene and 15 ml of acetonitrile are added and the mixture stirred until the sample has completely dissolved. Subsequently, 0.4 ml of p-toluenesulfonyl isocyanate are added by syringe and cannula and the mixture is stirred at low speed for 5-10 minutes. In order to decompose any remaining p-toluenesulfonyl isocyanate, 0.5 ml of distilled water are added and stirring is continued for further 5 minutes. Stirring is continued and about 50 ml of tetrahydrofuran are added. The solution titrated with a solution of tetrabutylammoniumhydroxide (c = 0.1 mol/l) using an automatic titrator (type "877 Titrino plus", commercially available from Deutsche Metrohm GmbH & Co. KG, Filderstadt, Germany), set to method "OHZ", and a glass membrane electrode (type "Solvotrode", commercially available from Deutsche Metrohm GmbH & Co. KG, Filderstadt, Germany).

For any sample, two runs of this analysis are carried out and the arithmetic mean value of the values obtained is calculated and given as the result.

### (6) Molecular weight of polyol compounds

For siloxane polyol compounds and other polyol compounds used in the preparation of compounds according to the present invention, the molecular weight is calculated on basis of the hydroxyl number determined according to the method described herein. Thus, the molecular weight M_{OHN} is calculated as ${MW}_{OHN} = \left(56100/OHN\right) ⋅ {f}_{OH}$ wherein
MW_{OHN} is the molecular weight determined according to this method,
OHN is the hydroxyl number obtained according to the method described herein,
f_{OH} is the number of hydroxyl groups per molecule.

### (7) Materials used

In the examples and comparative examples, the following materials were used. All standard laboratory chemicals were used as commercially available from established suppliers. Compounds not commercially available were prepared as described in the following.

**Table 1: Materials used in the examples**

| | | |
|---|---|---|
| B1 | Si Carbinol A | Silicone carbinol (CHT Germany GmbH, Tuebingen, Germany) |
| | Si Carbinol B | Silicone carbinol (CHT Germany GmbH, Tuebingen, Germany) |
| | Si Carbinol C | Silicone carbinol (CHT Germany GmbH, Tuebingen, Germany) |
| | Si Carbinol D | Silicone polyether (CHT Germany GmbH, Tuebingen, Germany) |
| | Silicone carbinol E | Silicone carbinol |
| | Silicone carbinol F | Silicone carbinol |
| | Silicone carbinol G | Silicone carbinol |
| B2 | Desmodur I | Isophorone diisocyanate (Covestro AG, Leverkusen, Germany), molecular weight 222.29 g/mol |
| | Desmodur H | Hexamethylene diisocyanate (Covestro AG, Leverkusen, Germany), molecular weight 168.20 g/mol |
| B3 | Ravecarb 107 | Polycarbonate polyol from hexandiol and pentandiol, M_{OHN} = 2000 g/mol, (Caffaro Industrie S.p.A., Torviscosa, Italy) |
| | AHN 2010 | Polyester polyol, M_{OHN} = 2000 g/mol, prepared from adipic acid, hexanediol and neopentyl glycol; |
| | AH 2000 | Polyester polyol, molecular weight 2000, prepared from adipic acid and hexanediol |
| B4 | Vestamin A 95 | Sodium 2-[(2-aminoethyl)amino]ethanesulfonate (Evonik Industries AG, Essen, Germany), molecular weight 190.17 g/mol |
| | Ethylendiamin | molecular weight 60.10 g/mol |
| | Bicat 8108 | Bismuth neodecanoate (Quimidroga S.A., Barcelona, Spain) |
| | CHT-Defoamer SI | Aqueous emulsion of polydimethylsiloxane (CHT Germany, Tuebingen, Germany) |

AH 2000 was prepared from adipic acid and hexanediol. AHN 2010 was prepared from adipic acid, hexanediol and neopentyl glycol. The following procedure was used.

The starting materials are placed in the amounts summarized hereinbelow in a 3-neck flask equipped with stirrer, distillation equipment with a vacuum connection. An acid catalyst (0.5% methanesulfonic acid) is then added. The mixture is heated to 110°C under stirring. Afterwards the temperature is increased to 175°C within 3 hours and the reaction water is distilled off. After these 3 hours, vacuum is applied (about 50-100mbar) and the reaction is continued (approx. 4 hours) until the desired OHZ is reached.

AH 2000: 500 g of adipic acid and 453 g of hexanediol are reacted until an OHN of 56 is reached.

AHN 2010: 500 g of adipic acid, 407 g of hexanediol and 40 g of neopentyl glycol are reacted until an OHN of 56 is reached.

Silicone carbinol E, silicone carbinol F and silicone carbinol G were prepared according to procedures involving Pt-catalyzed hydrosilylation of the corresponding hydrogen siloxanes and allylethers as described in European patent applications published as EP 1 975 193 A1 and EP 1 448 648 A1.

The silicone carbinols consist of the terminal units B1a and a random sequence of the central repeating units B1b and B1c, wherein the number of each of said units present in a molecule is as given in the following table.

**Table 2: Chemical structure of siloxane carbinols (indicated by means of number of units B1a, B1b, and B1c)**

| Silicone carbinol | Central unit B1b -[Si(Me)₂]-O- | Central unit B1c -[Si(Me](A1)]-O- | Terminal unit B1a (Me)₂(Al)Si-O_{0.5}- | Molecular weight M_{OHN} [g/mol] |
|---|---|---|---|---|
| A | 27 | 0 | 2 | 2000 |
| | | | y = 1, x = 1 | |
| B | 75 | 0 | 2 | 5610 |
| | | | y = 1, x = 1 | |
| C | 150 | 0 | 2 | 9350 |
| | | | y = 1, x = 1 | |
| D | 38 | 0 | 2 | 3200 |
| | | | y = 11 , x = 1 | |
| E | 78 | 2 | 2 | 6000 |
| | | y = 1, x = 1 | y = 1, x = 1 | |
| F | 26 | 2 | 2 | 2300 |
| | | y = 1, x = 1 | y = 1, x = 1 | |
| G | 10 | 4 | 2 | 1740 |
| | | y = 1, x = 1 | y = 1, x = 1 | |

| | | | | |
|---|---|---|---|---|
| A1 = -(CH₂)₃-O-[(EO)ₓ/(PO)₁₋ₓ]_{y}-H | | | | |

As an example, it can be read from the table that Silicone carbinol E has a structure in which 78 central units of type -[Si(Me)₂]-O- and 2 central units of type -[Si(Me](A1)]-O-, wherein A1 represents -(CH₂)₃-O-CH₂CH₂-O-H, are present in a random sequence in the chain molecule, which contains 2 terminal units of type (Me)₂(A1)Si-O_{0.5}-, wherein A1 has the same meaning as mentioned with respect to the central units.

### Example 1: General preparation procedure

Acetone (225 g) as the solvent and Silicone carbinol A (317 g, 158 mmol) are placed in a glass reactor equipped with stirrer, thermometer and reflux condenser. Catalyst (Bicat 8108, 0.4 g) and isocyanate (a mixture of Desmodur H, 20 g (117 mmol), and Desmodur I, 44 g (199 mmol)) are added under stirring. After addtion of the isocyanates the mixture is heated to a temperature of 60°C. The mixture is allowed to react for 60 minutes so as to form a prepolymer.

Then further acetone (225 g) is added. Afterwards the chain extender Vestamin A 95 (24 g (57 mmol), is added and the reaction mixture is stirred for 15 minutes at a temperature of 50 °C. Then 4.8 g (80 mmol) of the chain extender ethylene diamine is added and the reaction mixture is stirred for further 15 minutes at a temperature of 50 °C. Then, distilled water (588 g) is added slowly under vigorous stirring to obtain a dispersion of the polymeric reaction product. Defoamer (CHT-Defoamer SI, 1.5 g) is added and the acetone is removed by distillation (at a temperature of 50 °C and a pressure of about 500 mbar, which is slowly reduced to 100 mbar). The polymer dispersion thus obtainded has a solid content of approximately 40% and a pH value of approximately 7.5.

A coated paper is prepared by applying the polymer dispersion to a Glassine paper (90 g/m²) in an amount of 2 g/m² according to the method described above. The coating is dried by allowing the water of the dispersion to evaporate at a temperature of 120 °C for 2 minutes.

The properties of the coated paper are determined. The results are summarized in table 3b.

### Examples 2 to 4: Variation of siloxane chain length

According to the procedure described in example 1, the components indicated in table 3a are reacted in the amounts also given in table 3a in order to prepare polymer dispersions from different silicone carbinols.

A coated paper is prepared in the same manner as described in example 1. The properties of the coated paper are determined. The results are summarized in table 3b.

**Table 3a: Preparation of polymers according to examples 1 to 4**

| Component | Example 1 | Example 2 | Example 3 | Example 4 |
|---|---|---|---|---|
| Acetone | 450 g | 450 g | 450 | 450 g |
| Silicone carbinol A | 317 g | 301 g | 168 g | |
| | 158 mmol | 151 mmol | 84 mmol | |
| Silicone carbinol B | | | 171 g | |
| | | | 30 mmol | |
| Silicone carbinol C | | 15 g | | |
| | | 1.6 mmol | | |
| Silicone carbinol D | | | | 264 g |
| | | | | 82 mmol |
| Bicat 8108 | 0.4 g | 0.4 g | 0.4 g | 0.4 g |
| Desmodur H | 20 g | 19 g | 14 g | 8,4 g |
| | 117 mmol | 112 mmol | 84 mmol | 50 mmol |
| Desmodur I | 44 g | 43 g | 32 g | 19 g |
| | 199 mmol | 191 mmol | 144 mmol | 85 mmol |
| Vestamin A 95 | 24 g | 32 g | 21 g | 11 g |
| | 57 mmol | 74 mmol | 49 mmol | 25 mmol |
| Ethylene diamine | 4.8 g | 3.7 g | 3.1 g | 1.4 g |
| | 80 mmol | 62 mmol | 52 mmol | 23 mmol |
| Distilled water | 588 g | 584 g | 589 g | 694 g |
| Re-distilled acetone | -450 g | -450 g | -450 g | -450 g |
| CHT-Entschäumer SI | 1.5 g | 1.5 g | 1.5 g | 1.5 g |
| Total | 1000 g | 1000 g | 1000 g | 1000 g |
| Ratio OH:NCO | 1:2 | 1:2 | 1:2 | 1 : 1.6 |

**Table 3b: Properties of polymer dispersions and polymers according to examples 1 to 4**

| | Example 1 | Example 2 | Example 3 | Example 4 |
|---|---|---|---|---|
| Solid content [%] | 40.0 | 40.0 | 40.0 | 30.0 |
| pH | 7.5 | 7.5 | 7.3 | 7.6 |
| Release Force [N/inch] | 0.22 | 0.51 | 0.42 | 0.53 |
| Tackiness | 1 | 2 | 3 | 4 |
| Recyclability | 1 | 2 | 2 | 2 |

The pH of the aqueous dispersion, which is in the neutral range, indicates that essentially no free (basic) amine groups are present. That is, essentially no unreacted diamine chain externder agents (Vestamin A 95, ethylene diamine) remains in the dispersion.

The results obtained from the tests of the coated paper indicate that the chain length of the silicone component used in the polymer synthesis is suitable for controlling tackiness and recyclability of the coated base. Thus, in example 1 a polymer is prepared from Silicone carbinol A, which contains 27 central repeating units. In example 2 a polymer is prepared from a mixture of Silicone carbinol A and Silicone carbinol C, i.e. a part of the Silicone carbinol A is replaced with Silicone carbinol C, which contains 150 central repeating units and hence a longer silicone chain. It is observed that a coating of the polymer of example 2 has higher tackiness and reduced recyclability when compared to a coating prepared from the polymer of example 1.

Similarly, in example 3 a polymer is prepared from a mixture of Silicone carbinol A and Silicone carbinol B, i.e. relative to example 1 a part of the Silicone carbinol A is replaced with Silicone carbinol B, which contains 75 central repeating units and hence a longer silicone chain. It is observed that a coating of the polymer of example 3 has higher tackiness and reduced recyclability when compared to a coating prepared from the polymer of example 1.

Likewise, in example 4 a polymer is prepared from a mixture of Silicone carbinol D instead of Silicone carbinol A. Silicone carbinol D contains 38 central repeating units, whereas Silicone carbinol A contains only 27 central repeating units. It is observed that a coating of the polymer of example 4 has much higher tackiness and reduced recyclability when compared to a coating prepared from the polymer of example 1. The tackiness of the polymer of example 4 is also clearly higher than the tackiness of the polymers prepared in examples 2 and 3.

Thus, a polymer comprising a longer silicone chain gives a polymer coating having higher tackiness but lower recyclability than a polymer coating prepared from a polymer comprising a shorter silicone chain.

### Examples 5 to 8: Variation of branching of the polymer

According to the procedure described in example 1, the components indicated in the table 4a are reacted in order to prepare polymer dispersions from different silicone carbinols.

A coated paper is prepared in the same manner as described in example 1. The properties of the coated paper are determined. The results are summarized in table 4b.

**Table 4a: Preparation of polymers according to examples 5 to 8**

| Component | Example 5 | Example 6 | Example 7 | Example 8 |
|---|---|---|---|---|
| Acetone | 500 g | 500 g | 550 g | 500 g |
| Silicone carbinol A | 257 g | 310 g | 319 g | 261 g |
| | 128 mmol | 155 mmol | 159 mmol | 131 mmol |
| Silicone carbinol E | 81 g | | | |
| | 13 mmol | | | |
| Silicone carbinol F | | 19 g | | |
| | | 8 mmol | | |
| Trimethylol propane | | | 3.6 g | |
| | | | 27 mmol | |
| Si-Carbinol 10/6 | | | | 29 g |
| | | | | 17 mmol |
| Bicat 8108 | 0.4 g | 0.4 g | 0.4 g | 0.4 g |
| Desmodur H | 15 g | 17 g | 19 g | 22 g |
| | 90 mmol | 102 mmol | 114 mmol | 133 mmol |
| Desmodur I | 34 g | 39 g | 43 g | 49 g |
| | 154 mmol | 173 mmol | 195 mmol | 221 mmol |
| Vestamin A 95 | 19 g | 21 g | 24 g | 28 g |
| | 43 mmol | 50 mmol | 56 mmol | 64 mmol |
| Ethylene diamine | 2.2 g | 2.6 g | 2.6 g | 5.2 g |
| | 36 mmol | 43 mmol | 43 mmol | 87 mmol |
| Distilled water | 590 g | 590 g | 587 g | 604 g |
| Re-distilled acetone | -500 g | -500 g | -550 g | -500 g |
| CHT-Entschäumer SI | 1.5 g | 1.5 g | 1.5 g | 1.5 g |
| Total | 1000 g | 1000 g | 1000 g | 1000 g |
| Ratio OH : NCO | 1:1.6 | 1:1.6 | 1:1.6 | 1:2 |

**Table 4b: Properties of polymer dispersions and polymers according to examples 5 to 8**

| | Example 5 | Example 6 | Example 7 | Example 8 |
|---|---|---|---|---|
| Soild content [%] | 40.1 | 40.0 | 40.2 | 38.2 |
| pH | 7.6 | 7.5 | 7.1 | 7.7 |
| Release Force [N/inch] | 0.61 | 0.69 | 0.62 | 1.38 |
| Tackiness | 3 | 2 | 1 | 1 |
| Recyclability | 1 | 2 | 3 | 3 |

The pH of the aqueous dispersion, which is in the neutral range, indicates that essentially no free (basic) amine groups are present. That is, essentially no unreacted diamine chain externder agents (Vestamin A 95, ethylene diamine) remains in the dispersion.

The results obtained from the tests of the coated paper indicate that the content of branched units in the polymer chain is suitable for controlling tackiness and recyclability of the coated base. Thus, in example 5 a polymer is prepared from Silicone carbinol A, which is linear, and Silicone carbinol E, each molecule of which imparts a branching to the polymer. In example 6 a polymer is prepared from a mixture of Silicone carbinol A and a lower amount of Silicone carbinol F, which imparts branching to the polymer. It is observed that a coating of the polymer of example 6 has lower tackiness and reduced recyclability when compared to a coating prepared from the polymer of example 5.

Similarly, in example 7 a polymer is prepared from a mixture of Silicone carbinol A and trimethylolpropane, each molecule of which imparts a branching to the polymer. It is observed that a coating of the polymer of example 7 has lower tackiness and also reduced recyclability when compared to a coating prepared from the polymer of example 5.

In example 8 a polymer is prepared from a mixture of Silicone carbinol A and Silicone carbinol G. Each molecule of Silicone carbinol G imparts 4 branchings to the polymer. It is observed that a coating of the polymer of example 8 has much lower tackiness and reduced recyclability when compared to a coating prepared from the polymer of example 5. The tackiness of the polymer of example 8 is also lower than the tackiness of the polymer prepared in example 6.

Thus, a polymer having a high content of branched units in the polymer chain gives a polymer coating having low tackiness but lower recyclability than a polymer coating prepared from a polymer having a low content of branched units in the polymer chain. A polymer comprising units imparting a high amount of branching likewise gives a polymer coating having lower tackiness and lower recyclability.

### Examples 9 to 11: Variation of siloxane content in the polymer chain

According to the procedure described in example 1, the components indictaed in the table 5a are reacted in order to prepare polymer dispersions from different silicone carbinols.

A coated paper is prepared in the same manner as described in example 1. The properties of the coated paper are determined. The results are summarized in table 5b.

**Table 5a: Preparation of polymers according to examples 9 to 11**

| Component | Example 9 | Example 10 | Example 11 |
|---|---|---|---|
| Acetone | 400 g | 400 g | 450 g |
| Silicone carbinol A | 258 g | 255 g | 226 g |
| | 129 mmol | 128 mmol | 113 mmol |
| Ravecarb 107 | 65 g | | |
| | 32 mmol | | |
| AHN 2010 | | 76 g | |
| | | 38 mmol | |
| AH 2000 | | | 98 g |
| | | | 49 mmol |
| Bicat 8108 | 0.4 g | 0.4 g | 0.4 g |
| Desmodur H | 16 g | 16 g | 16 g |
| | 96 mmol | 95 mmol | 96 mmol |
| Desmodur I | 36 g | 36 g | 36 g |
| | 163 mmol | 161 mmol | 163 mmol |
| Vestamin A 95 | 19 g | 19 g | 20 g |
| | 44 mmol | 44 mmol | 46 mmol |
| Ethylene diamine | 2.6 g | 2.2 g | 2.4 g |
| | 43 mmol | 37 mmol | 40 mmol |
| Distilled water | 602 g | 594 g | 600 g |
| Re-distilled acetone | -400 g | -400 g | -450 g |
| CHT-Entschäumer SI | 1.5 g | 1.5 g | 1.5 g |
| Total | 1000 g | 1000 g | 1000 g |
| Ratio OH:NCO | 1:1.6 | 1:1.6 | 1:1.6 |

**Table 5b: Properties of polymer dispersions and polymers according to examples 9 to 11**

| | Example 9 | Example 10 | Example 11 |
|---|---|---|---|
| Soild content [%] | 40.4 | 39.8 | 41.0 |
| pH | 7.2 | 7.0 | 7.0 |
| Release Force [N/inch] | 0.38 | 0.62 | 1.10 |
| Tackiness | 3 | 2 | 1 |
| Recyclability | 2 | 2 | 2 |

The pH of the aqueous dispersion, which is in the neutral range, indicates that essentially no free (basic) amine groups are present. That is, essentially no unreacted diamine chain externder agents (Vestamin A 95, ethylene diamine) remains in the dispersion.

The results obtained from the tests of the coated paper indicate that the content of non-siloxane units in the polymer chain is suitable for controlling tackiness and, furthermore, the release forces, whereas recyclability of the coated base is not affected. Thus, in example 9 a polymer is prepared from Silicone carbinol A, i.e. a linear silicone carbinol, and Ravecarb 107, which is a linear polycarbonate polyol (i.e. a diol). In example 10 a polymer is prepared from a mixture of Silicone carbinol A and AHN 2010 (a polyester polyol). It is observed that a coating of the polymer of example 10 has lower tackiness compared to a coating prepared from the polymer of example 9.

Similarly, in example 11 a polymer is prepared from a mixture of Silicone carbinol Aand and AH 2000 (a polyester polyol). It is observed that a coating of the polymer of example 11 has lower tackiness compared to a coating prepared from the polymer of examples 9 and 10, respectively.

Thus, a polymer having a lower content of siloxane units in the polymer chain gives a polymer coating having higher tackiness but also leads to higher release forces.

### Comparative examples 1 to 3: Coatings from polymers known from the prior art.

A coated paper is prepared in the same manner as described in example 1 using the following polymers.

| | |
|---|---|
| Comparative example 1: | Tubicoat A94, a styrene-acrylate copolymer, commercially available from CHT Germany GmbH, typically used as an adhesive. |
| Comparative example 2: | Tubicoat PUS, a polyurethane polymer, commercially available from CHT Germany GmbH, typically used as an adhesive. |
| Comparative example 3: | Tubicoat APU-SI 109, a silicone-acrylate-polyurethane hybride copolymer, commercially available from CHT Germany GmbH, typically used as an adhesive. |
| Comparative example 4: | Standard silicone (Syl-Off, commercially available from Dow, Wiesbaden, Germany) |

The properties of the coated paper are determined. The results are summarized in table 6.

**Table #4: Properties of polymer dispersions and polymers according to comparative examples 1 to 4**

| | Comp. Ex. 1 | Comp. Ex. 2 | Comp. Ex. 3 | Comp. Ex. 4 |
|---|---|---|---|---|
| Release Force [N/inch] | 15.98 | 14.32 | 3.6 | 0.1 |
| Recyclability | nd*⁾ | nd*⁾ | nd*⁾ | 4 |

| | | | | |
|---|---|---|---|---|
| *⁾: nd = not determined | | | | |

A release force of more than 1.5 N/inch is not suitable for a coating to be used in a release liner application. Therefore, the polymers used in comparative examples 1 to 3 are clearly not suitable for being used in a release liner application and, for this reason, the recyclability of the coated base was not determined. In contrast, a standard silicone exhibits the worst recyclability within this test series.

## Claims

1. Siloxane copolymer compound comprising the repeating units B1, B2 and at least one of B3 and B4, wherein each occurrence of B1, B2, B3, and B4 independently has the following meaning:
B1 has a siloxane structure consisting of substructures B1a to B1c represented by the following formulae
| | | |
|---|---|---|
| B1a | [(R¹)₂(A)Si-] | of which t units are present, |
| B1b | [-(R¹)₂Si-] | of which z1 units are present, |
| B1c | [-(R¹)(A)Si-] | of which z2 units are present, |
wherein
the silicon atom present in each of the substructures B1a to B1c is linked to the silicon atom of an adjacent substructure by means of an oxygen atom,
R' independently is a C1-C30 hydrocarbon group,
A is @Si-R²-(-O-R¹⁴-)ₑ₁-{-O-[(EOₓ)/(AO)₁₋ₓ)]_{y}-@1}ₑ₂,
@Si is a site of covalent bonding to the silicon atom of substructure B1a or B1c,
@1 is a site of covalent bonding,
R² is a linear or branched C2-C8 alkylene group,
R¹⁴ is a linear, branched or cyclic aliphatic group having (e2 + 1) to 6 carbon atoms and e2 sites of covalent bonding to an oxygen atom of each of the e2 moieties represented by {-O-[(EOₓ)/(AO)₁₋ₓ)]_{y}-@1} and wherein no carbon atom of R¹⁴ is covalently bonded to more than one oxygen atom,
e1 is 0 or 1,
e2 is 1 to 3, wherein e2 is 1, when e1 = 0,
EO represents a -CH₂-CH₂-O- group,
AO represents a -CH₂-CH(R³)-O- group or a -CH(R³)-CH₂-O- group,
R³ represents a linear or branched C1-C4 alkyl group,
[(EOₓ)/(AO)₁₋ₓ)]_{y} represents a substructure in which a total number of y structural units represented by EO and/or AO are covalently bonded in a statistical sequence or in a block sequence,
x has a value in the range of 0 to 1,
y has a value in the range of 0 to 100,
t is 2,
z1 is 0 to 200,
z2 is 0 to 20;
B2 has a structure represented by the following formula
U[-NH-C(=O)-@2]ₘ
wherein
U is a substructure comprising 1 to 20 carbon atoms, wherein the nitrogen atom of each moiety -NH-C(=O)-@2 is covalently bonded to a carbon atom of U,
m is 2 to 6,
@2 is a site of covalent bonding;
B3 has a structure represented by the following formula
R⁴[-O-@1]ₙ
wherein
R⁴ is a substructure comprising at least n carbon atoms, wherein the oxygen atom of each moiety -O-@1 is covalently bonded to a carbon atom of R⁴ and no carbon atom of R⁴ is covalently bonded to more than one moiety -O-@1 ,
n is 1 to 6,
@1 is a site of covalent bonding;
B4 has a structure represented by the following formula (B4a) or (B4b)
| | |
|---|---|
| (B4a) | R⁵[-NR⁶-@1]ₚ |
| (B4b) | R⁶(@1-)N-[-CH₂-CH₂-NR⁶(-@1)-]ᵤ-CH₂-CH₂-NR⁶(-@1) |
wherein
R⁵ is a substructure comprising at least p carbon atoms, wherein the nitrogen atom of each moiety -NR⁶-@1 is covalently bonded to a carbon atom of R⁵ and no carbon atom of R⁵ is covalently bonded to more than one moiety -NR⁶-@1 ,
each R⁶ is independently hydrogen or a group comprising at least 1 carbon atom,
p is 1 to 6,
u is 1 to 5
@1 is a site of covalent bonding;
and wherein a covalent bond is present between a site marked with @1 and a site marked with @2.

2. Siloxane copolymer compound according to claim 1, wherein
e1 is 0 and e2 is 1, and/or
R¹ is a C1-C7 hydrocarbon group, preferably a linear or branched C1-C6 alkyl group, more preferably methyl; and/or
R² is a linear or branched C3-C6 alkylene group, preferably a linear C3 alkylene group; and/or
R³ is a linear C1-C4 alkyl group, preferably a linear C1-C3 alkyl group, more preferably a methyl group; and/or
y has a value in the range of 1 to 50, preferably 2 to 30, more preferably 3 to 20, still more preferably 4 to 15, most preferably 5 to 12; and/or
x has a value in the range of from 0.3 to 1, preferably 0.5 to 1, more preferably 0.7 to 1, most preferably 1; and/or
z1 has a value in the range of 5 to 150, preferably 10 to 150, more preferably 20-150; and/or
z2 has a value in the range of 0 to 4, preferably 0 to 3, more preferably 0 to 2, most preferably 0 or 1.

3. Siloxane copolymer compound according to claim 1 or claim 2, wherein
(i) m is 2, 3, or 4; and/or
U is aliphatic and preferably has 4 to 16 carbon atoms, more preferably 4 to 13 carbon atoms, most preferably 6 to 10 carbon atoms, or
U comprises aromatic substructures and has 6 to 16 carbon atoms, preferably 6 to 14 carbon atoms, more preferably 6 to 12 carbon atoms; and/or
(ii) n has a value in the range of 2 to 5, preferably 2 to 4, more preferably 2 to 3, most preferably 2; and/or
R⁴ contains 2 to 20 carbon atoms, 2 to 12 carbon atoms, more preferably 2 to 8 carbon atoms, still more preferably 2 to 6, most preferably 2, 3, or 4 carbon atoms;
and/or
R⁴ is aliphatic or contains aliphatic and aromatic substructures and preferably contains 6 to 20 carbon atoms;
(iii) B4 has a structure represented by formula (B4a), wherein
p has a value in the range of 2 to 5, preferably 2, 3, or 4, more preferably 2 or 3, still more preferably 2; and/or
R⁵ contains 2 to 20 carbon atoms, preferably 2 to 12, more preferably 2 to 8, still more preferably 2 to 6; and/or
R⁶ represents H, a C1-C10 alkyl group, or -R¹²-G1, wherein R¹² represents a C2-C20 alkylene group and G1 represents an anionic group, a cationic group or a non-ionic group; or
(iv) B4 has a structure represented by formula (B4b), wherein
u is 0 to 4, preferably 0 to 3, more preferably 0, 1 or 2, still more preferably 0 or 1.

4. Siloxane copolymer compound according to claim 1 or claim 2, wherein
(i) B3 represents
@1-O-CH₂CH₂-O-@1,
@1-O-CH₂CH₂(CH₃)-O-@1,
@1-O-CH₂-CH(-O@1)-CH₂-O-@1,
@1-O-CH₂-CR⁷(-CH₂-O@1)-CH₂-O-@1,
@1-O-CH₂-C(-CH₂-O@1)₂-CH₂-O-@1,
@1-O-CH₂-CH(-O-Y1)-CH₂-O-@1,
@1-O-CH₂-CH(-O@1)-CH₂-O-Y1,
@1-O-CH₂-CR⁷(-CH₂-O@1)-CH₂-O-Y1,
or any combination of these,
wherein
R⁷ represents methyl, ethyl, n-propyl or i-propyl,
Y1 represents -(EO)₁₀₋₃₀-CH₃, wherein -(EO)₁₀₋₃₀- represents a chain consisting of 10 to 30 ethyleneoxy units;
and/or
(ii) B4 represents
@1-HN-CH₂CH₂-NH-@1,
@1-HN-CH₂CH₂(CH₃)-NH-@1,
@1-HN-CH₂-CH(-NH@1)-CH₂-CH₂-SO₃⁻M ,
wherein M represents an alkali metal cation or an ammonium cation,
(@1-)NH-[-CH₂-CH₂-NH(-@1)-]ᵤ-CH₂-CH₂-NH(-@1),
wherein u is 1, 2, or 3.

5. Siloxane copolymer compound according to any one of claims 1 to 4, wherein the ratio (xB1 * e2 * (2 + z2) + xB3 * n) / (xB2 * m)
is in the range of 1.00 : 1.25 to 1.0 : 3.00, preferably 1.00 : 1.50 to 1.0 : 2.70, more preferably 1.00 : 1.70 to 1.0 : 2.40, still more preferably 1.00 : 1.80 to 1.0 : 2.30, wherein
xB1 represents the number of repeating units B1 present in the siloxane copolymer compound relative to the total amount of repeating units B1, B2, B3, and B4,
xB2 represents the number of repeating units B2 present in the siloxane copolymer compound relative to the total amount of repeating units B1, B2, B3, and B4,
xB3 represents the number of repeating units B3 present in the siloxane copolymer compound relative to the total amount of repeating units B1, B2, B3, and B4,
e2 and z2 each have the same meaning as defined hereinabove with respect to the structure of repeating unit B1,
m has the same meaning as defined hereinabove with respect to the structure of repeating unit B2, and
n has the same meaning as defined hereinabove with respect to the structure of repeating unit B3.

6. Method of preparing a siloxane copolymer compound comprising the repeating units B1, B2 and at least one of B3 and B4 as defined in any one of claims 1-5, which method comprises
(a) a first step of reacting
(i) an isocyanate compound B2r of the general formula U[-NCO]ₘ,
with
(ii) a siloxane compound B1r having a siloxane structure consisting of substructures B1ar, B1b and B1cr represented by the following formulae
| | | |
|---|---|---|
| B1ar | [(R¹)₂(Ar)Si-] | of which t units are present, |
| B1b | [-(R¹)₂Si-] | of which z1 units are present, |
| B1cr | [-(R¹)(Ar)Si-] | of which z2 units are present, |
wherein
the silicon atom present in each of the substructures B1ar, B1b and B1cr is linked to the silicon atom of an adjacent substructure by means of an oxygen atom,
Ar is @Si-R²-(-O-R¹⁴-)ₑ₁-{-O-[(EOₓ)/(AO)₁₋ₓ)]_{y}-H}ₑ₂ @Si is a site of covalent bonding to the silicon atom of substructure B1a or B1c,
and, optionally,
(iii) a polyol compound B3r of the general formula R⁴[-OH]ₙ,
and
(b) a second step of reacting the product obtained from the first step with a polyamine B4r of the general formula (B4ar) or (B4br)
| | |
|---|---|
| (B4a) | R⁶[-NH R⁶]ₚ |
| (B4b) | R⁶HN-[-CH₂-CH₂-NHR⁶⁻]ᵤ-CH₂-CH₂-NHR⁶ ; |
wherein each of R¹, R², R⁴, R⁵, R⁶, R¹⁴, t, z1, z2, e1, e2, m, n, p, u, x, y has the meaning as defined in any one of claims 1 to 5.

7. Aqueous dispersion comprising
(a) the siloxane copolymer compound as defined in any one of claims 1 to 5 and
(b) water.

8. Aqueous dispersion according to claim 7, wherein
the siloxane copolymer compound is present in an amount of 20-70 wt.-%, preferably 30-65 wt.-%, more preferably 40-60 wt.-%, relative to the total weight of the dispersion;
and/or
the aqueous dispersion further contains an auxiliary agent, which is preferably selected from methanol, ethanol, n-propanol, i-propanol, acetone, butanone, tetrahydrofuran, dioxane or a combination of these.

9. Method of preparing an aqueous dispersion comprising the steps of
(a) preparing a mixture of
(i) a solution of a siloxane copolymer compound, which siloxane copolymer compound is as defined in any one of claims 1 to 5 in an organic solvent, which organic solvent is miscible with water,
(ii) optionally an adjuvant, and
(iii) water,
and
(b) removing at least a part of the organic solvent from the mixture prepared in step (a).

10. Method of preparing an aqueous dispersion according to claim 9, wherein
the organic solvent is selected from methanol, ethanol, n-propanol, i-propanol, acetone, butanone, tetrahydrofuran, dioxane or a combination of these; and/or in step (b) the organic solvent is removed under a pressure of 800 mbar or less and/or at a temperature of 40 °C or higher.

11. Release liner comprising (a) a base and (b) a layer of the siloxane copolymer compound as defined in any one of claims 1 to 5.

12. Release liner according to claim 11, wherein
the base is a cellulose material, preferably paper or cardboard, wherein the paper preferably has an area weight in the range of 50 to 150 g/m²; and/or
the layer of the siloxane copolymer compound has a thickness in the range of 1 to 30 µm, preferably 1 to 20 µm; and/or
the layer of the siloxane copolymer compound has a coating weight in the range of 1 to 10 g/m², preferably 2 to 5 g/m².

13. Method of preparing a release liner as defined in claims 12, comprising the steps of
(a) applying an aqueous dispersion as defined in claim 7 or claim 8 to a surface of a base,
(b) allowing the water to evaporate from said dispersion.

14. Method of preparing a release liner according to embodiment [6.1], wherein
the base layer is a cellulose material, preferably paper or cardboard; and/or step (b) is carried out at a temperature in the range of 70 °C to 130 °C and, preferably, over a period time in the range of 1 to 5 minutes.

15. Adhesive article comprising in this order
(i) an article having a surface,
(ii) a layer of an adhesive on the surface of said article, which layer has a thickness in the range of 5-500 µm,
(iii) a layer of a siloxane copolymer compound as defined in any one of claims 1 to 5, which layer has a thickness in the range of 1-30 µm, and
(iv) a base.
